# EUROPEAN PATENT APPLICATION

(11) **EP 3 425 942 A1**
(43) Date of publication of application: **09.01.2019**
(21) Application number: 18190737.9
(22) Date of filing: 20.12.2012
(51) Int. Cl.: H04W 4/70

(54) **METHOD AND APPARATUS FOR SUPPORTING MACHINE-TO-MACHINE COMMUNICATIONS**

(30) Priority: 13.01.2012 US 201261586352 P; 30.08.2012 US 201261694904 P
(62) Divisional of application: 12813219.8
(71) Applicant: IOT HOLDINGS, INC., Wilmington, DE 19809 (US)
(72) Inventor: WANG, Chonggang, Princeton, NJ New Jersey 08540 (US); LU, Guang, Dollard-des-Ormeaux, Québec H9B 1J4 (CA); KUMAR, Rohit, Montreal, Québec H3H 2C3 (CA); STARSINIC, Michael F., Newton, PA Pennsylvania 18940 (US); SEED, Dale N., Allentown, PA Pennsylvania 18104 (US); DONG, Lijun, Bridgeport, PA Pennsylvania 19405 (US); LY, Quang, North Wales, PA Pennsylvania (US); FLYNN IV, William R., Schwenksville, PA Pennsylvania 19473 (US); PODIAS, Nicholas J., Brooklyn, NY New York 11209 (US); LI, Qing, Princeton Junction, NJ New Jersey 08550 (US); RUSSEL, JR., Paul, L., Pennington, NJ New Jersey 08534 (US)
(74) Representative: Heinze, Ekkehard

(57) **Abstract**

A method for a machine-to-machine (M2M) control server configured to support M2M communications, the method comprising receiving, by the M2M control server, a registration request from each of a plurality of M2M data servers; registering, by the M2M control server, each of the plurality of M2M data servers based on each of the registration requests in an inventory; sending, by the M2M control server, after the registering, a respective registration response to each of the plurality of M2M data servers based on the registering; receiving, by the M2M control server, a method request from a source regarding data stored on a first M2M data server of the plurality of registered M2M data servers; and routing, by the M2M control server, the method request to the first M2M server based on one or more criteria.

## Description

### CROSS REFERENCE TO RELATED APPLICATIONS

This application claims the benefit of U.S. provisional application Nos. 61/586,352 filed January 13, 2012 and 61/694,904 filed August 30, 2012, the contents of which are hereby incorporated by reference herein.

### BACKGROUND

European Telecommunications Standards Institute (ETSI) machine-to-machine (M2M) standard contains an overall end-to-end M2M functional architecture. The ETSI M2M standard describes a resources-based architecture that can be used for the exchange of data and events between machines.

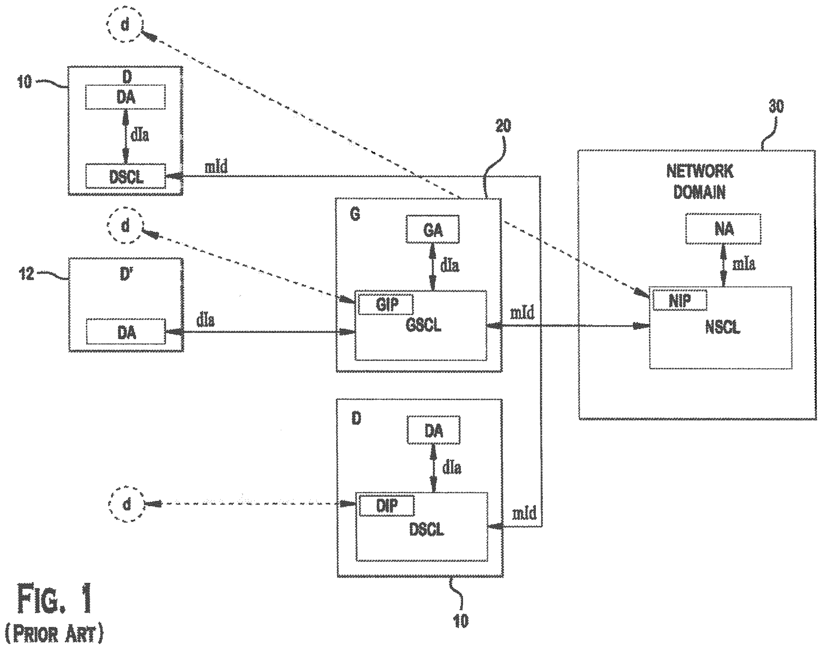

FIG. 1 shows a conventional ETSI M2M architecture. The M2M architecture includes M2M devices including D devices 10 and/or D' devices 12, an M2M gateway(s) 20, and a network domain 30. An M2M device 10/12 is a device that runs M2M application(s) using M2M service capabilities. The M2M devices 10/12 may connect to the network domain 30 either directly or via the M2M gateway 20. A D device 10 may provide M2M service capability (i.e., device service capability layer (DSCL)) that communicates to a network service capability layer (NSCL) using an mId reference point and to a device application (DA) using a dIa reference point. A D' device 12 may host a DA that communicates to a gateway service capability layer (GSCL) using a dIa reference point. A D' device 12 does not implement ETSI M2M service capabilities. There may be a non-ETSI M2M compliant device ('d' device) that connects to the service capability layer (SCL). The d devices do not use ETSI M2M defined reference points.

An M2M gateway 20 runs M2M application(s) using M2M service capabilities. The M2M gateway 20 may act as a proxy between M2M devices 10/12 and the network domain 30. The M2M gateway 20 may provide a service to other devices (e.g., d devices) connected to it that are hidden from the network domain. The M2M gateway 20 may provide M2M service capabilities (i.e., GSCL) that communicates to the NSCL using the mId reference point and to a gateway application (GA) using the dIa reference point.

The network domain 30 comprises an access network and a core network. The access network is a network which allows the M2M device and the gateway to communicate with the core network. The access network includes, but is not limited to, x-Digital Subscriber Line (xDSL), GPRS EDGE Radio Access Network (GERAN), UMTS Terrestrial Ratio Access Network (UTRAN), Evolved UTRAN (E-UTRAN), wireless local area network (WLAN), WiMAX, etc. The core network provides Internet protocol (IP) connectivity, service and network control functions, interconnection with other networks, roaming, etc. The core network includes, but is not limited to, Third Generation Partnership Project (3GPP) core network, ETSI Telecoms & Internet converged Services & Protocols for Advanced Networks (TISPAN) core network, 3GPP2 core network, etc.

The ETSI M2M defines 3 reference points (mIa, dIa, and mId) as shown in FIG. 1. The mIa reference point offers generic and extendable mechanism for network applications interactions with the NSCL. The dIa reference point offers generic and extendable mechanism for DA/GA interactions with the DSCL or GSCL. The mId reference point offers generic and extendable mechanism for SCL interactions.

### SUMMARY

A method and apparatus for distributed services and data in an M2M communication network are disclosed. A network server, an M2M gateway, and M2M devices that comprise an M2M network architecture. The network server, the M2M gateway, and the M2M device may comprise a processor that is configured to implement an M2M service capability layer for supporting M2M service capabilities. Reference points may be defined in the M2M network architecture for interactions between network service capability layers, between gateway service capability layers, between a gateway service capability layer and a device service capability layer of an M2M device, between M2M device applications, and/or between a network/gateway/device service capability layer and an M2M application.

The network server may be split into a control server and a data server at the service capability layer to provide service capabilities for control functions and service capabilities for data functions, respectively. Reference points for control functions and data functions may be separately provided between network service capability layers; between gateway service capability layers; between a gateway service capability layer and a device service capability layer; between M2M device applications; and/or between a network/gateway/device service capability layers and an M2M application at the service capability layer level. The data server may be configured to interact with another data server to push or pull data or resources either directly or indirectly via the control server.

The control server and the data server may have a resource for storing a list of registered data servers or control servers. The network server and/or the gateway may have a capabilities resource for storing information for sharing of capabilities with another network server or another gateway. Each instance of the capabilities resource may include sub-resources for storing information regarding supported capabilities, capabilities shared with other service capability layers, and capabilities shared from other service capability layers.

### BRIEF DESCRIPTION OF THE DRAWINGS

A more detailed understanding may be had from the following description, given by way of example in conjunction with the accompanying drawings wherein:
FIG. 1 is a conventional ETSI M2M architecture;
FIG. 2A is a system diagram of an example communications system in which one or more disclosed embodiments may be implemented;
FIG. 2B is a system diagram of an example wireless transmit/receive unit (WTRU) that may be used within the communications system illustrated in FIG. 2A;
FIG. 2C is a system diagram of an example radio access network and an example core network that may be used within the communications system illustrated in FIG. 2A;
FIG. 3 shows an example M2M architecture with new reference points in accordance with one embodiment;
FIG. 4 shows an example M2M architecture wherein mId reference points with extensions are used;
FIG. 5 shows an example scalable M2M architecture (SMA);
FIG. 6 shows an example structure that one M2M control server controls multiple M2M data servers;
FIG. 7 is a flow diagram of an example procedure for M2M data server registration with an M2M control server;
FIG. 8 is a flow diagram of an example procedure for enhanced SCL registration;
FIG. 9A is a signaling diagram of an example procedure for data move and copy operation wherein data is indirectly accessed between M2M data servers in accordance with one embodiment;
FIG. 9B is a signaling diagram of an example procedure for data move and copy operation wherein data is directly accessed between M2M data servers in accordance with one embodiment;
FIG. 10A is a signaling diagram of an example procedure for data copy and move operations wherein data is accessed indirectly between M2M data servers in accordance with another embodiment;
FIG. 10B is a signaling diagram of an example procedure for data move and copy operation wherein data is accessed directly between M2M data servers in accordance with another embodiment;
FIG. 11A shows an example resource structure including a centralized resource "dataServers";
FIG. 11B shows an example resource structure including distributed resource "dataServers";
FIGS. 12A and 12B show an example sclBase tree structure for an M2M control server;
FIGS. 13A and 13B show an sclBase tree structure for data server;
FIG. 14 shows an example structure of resource "dataServers";
FIG. 15 shows an example structure of resource "controlServers";
FIG. 16 shows the structure of "requestedServices";
FIG. 17 shows the structure of "agreedServices";
FIG. 18 shows an example structure of "trafficStatistics" resource;
FIG. 19A shows an example resource for capability management under <sclBase>;
FIG. 19B shows an example structure of resource "capabilities";
FIG. 19C shows an example structure of resource "remoteCaps";
FIG. 20 is a signaling diagram of an example procedure for capability sharing with mutual registration;
FIG. 21 is a signaling diagram of an example procedure for capability sharing without mutual registration;
FIG. 22 is a signaling diagram of an example procedure for SCL mutual registration;
FIGS. 23A and 23B is a signaling diagram of an example procedure for GSCL-GSCL capability sharing;
FIG. 24 shows the conventional SCL resource structure;
FIG. 25 shows an example SCL resource structure in accordance with one embodiment; and
FIG. 26 shows an sclBase resource structure.

### DETAILED DESCRIPTION

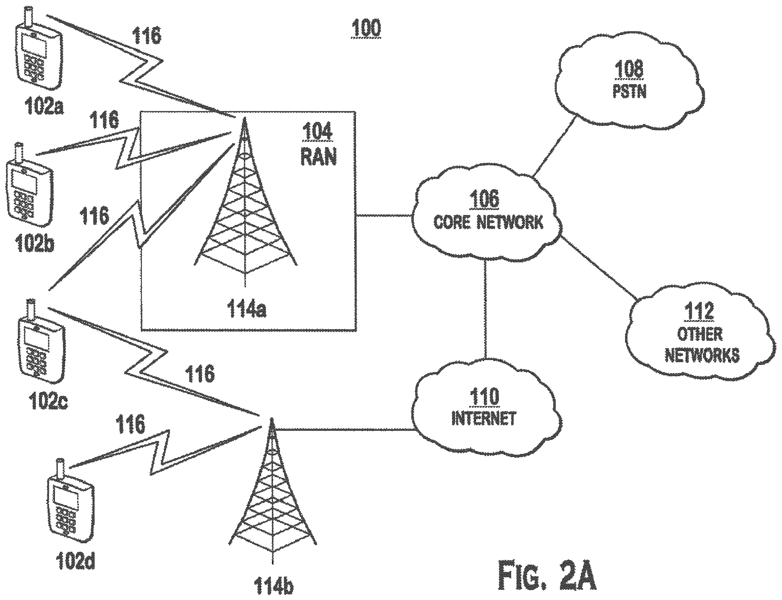

FIG. 2A is a diagram of an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), and the like.

As shown in FIG. 2A, the communications system 100 may include wireless transmit/receive units (WTRUs) 102a, 102b, 102c, 102d, a radio access network (RAN) 104, a core network 106, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d may be configured to transmit and/or receive wireless signals and may include user equipment (UE), a mobile station, a fixed or mobile subscriber unit, a pager, a cellular telephone, a personal digital assistant (PDA), a smartphone, a laptop, a netbook, a personal computer, a wireless sensor, consumer electronics, and the like.

The communications systems 100 may also include a base station 114a and a base station 114b. Each of the base stations 114a, 114b may be any type of device configured to wirelessly interface with at least one of the WTRUs 102a, 102b, 102c, 102d to facilitate access to one or more communication networks, such as the core network 106, the Internet 110, and/or the networks 112. By way of example, the base stations 114a, 114b may be a base transceiver station (BTS), a Node-B, an eNode B, a Home Node B, a Home eNode B, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104, which may also include other base stations and/or network elements (not shown), such as a base station controller (BSC), a radio network controller (RNC), relay nodes, etc. The base station 114a and/or the base station 114b may be configured to transmit and/or receive wireless signals within a particular geographic region, which may be referred to as a cell (not shown). The cell may further be divided into cell sectors. For example, the cell associated with the base station 114a may be divided into three sectors. Thus, in one embodiment, the base station 114a may include three transceivers, i.e., one for each sector of the cell. In another embodiment, the base station 114a may employ multiple-input multiple output (MIMO) technology and, therefore, may utilize multiple transceivers for each sector of the cell.

The base stations 114a, 114b may communicate with one or more of the WTRUs 102a, 102b, 102c, 102d over an air interface 116, which may be any suitable wireless communication link (e.g., radio frequency (RF), microwave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104 and the WTRUs 102a, 102b, 102c may implement a radio technology such as Universal Mobile Telecommunications System (UMTS) Terrestrial Radio Access (UTRA), which may establish the air interface 116 using wideband CDMA (WCDMA). WCDMA may include communication protocols such as High-Speed Packet Access (HSPA) and/or Evolved HSPA (HSPA+). HSPA may include High-Speed Downlink Packet Access (HSDPA) and/or High-Speed Uplink Packet Access (HSUPA).

In another embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A).

In other embodiments, the base station 114a and the WTRUs 102a, 102b, 102c may implement radio technologies such as IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 2A may be a wireless router, Home Node B, Home eNode B, or access point, for example, and may utilize any suitable RAT for facilitating wireless connectivity in a localized area, such as a place of business, a home, a vehicle, a campus, and the like. In one embodiment, the base station 114b and the WTRUs 102c, 102d may implement a radio technology such as IEEE 802.11 to establish a wireless local area network (WLAN). In another embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, etc.) to establish a picocell or femtocell. As shown in FIG. 2A, the base station 114b may have a direct connection to the Internet 110. Thus, the base station 114b may not be required to access the Internet 110 via the core network 106.

The RAN 104 may be in communication with the core network 106, which may be any type of network configured to provide voice, data, applications, and/or voice over internet protocol (VoIP) services to one or more of the WTRUs 102a, 102b, 102c, 102d. For example, the core network 106 may provide call control, billing services, mobile location-based services, prepaid calling, Internet connectivity, video distribution, etc., and/or perform high-level security functions, such as user authentication. Although not shown in FIG. 2A, it will be appreciated that the RAN 104 and/or the core network 106 may be in direct or indirect communication with other RANs that employ the same RAT as the RAN 104 or a different RAT. For example, in addition to being connected to the RAN 104, which may be utilizing an E-UTRA radio technology, the core network 106 may also be in communication with another RAN (not shown) employing a GSM radio technology.

The core network 106 may also serve as a gateway for the WTRUs 102a, 102b, 102c, 102d to access the PSTN 108, the Internet 110, and/or other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and the internet protocol (IP) in the TCP/IP internet protocol suite. The networks 112 may include wired or wireless communications networks owned and/or operated by other service providers. For example, the networks 112 may include another core network connected to one or more RANs, which may employ the same RAT as the RAN 104 or a different RAT.

Some or all of the WTRUs 102a, 102b, 102c, 102d in the communications system 100 may include multi-mode capabilities, i.e., the WTRUs 102a, 102b, 102c, 102d may include multiple transceivers for communicating with different wireless networks over different wireless links. For example, the WTRU 102c shown in FIG. 2A may be configured to communicate with the base station 114a, which may employ a cellular-based radio technology, and with the base station 114b, which may employ an IEEE 802 radio technology.

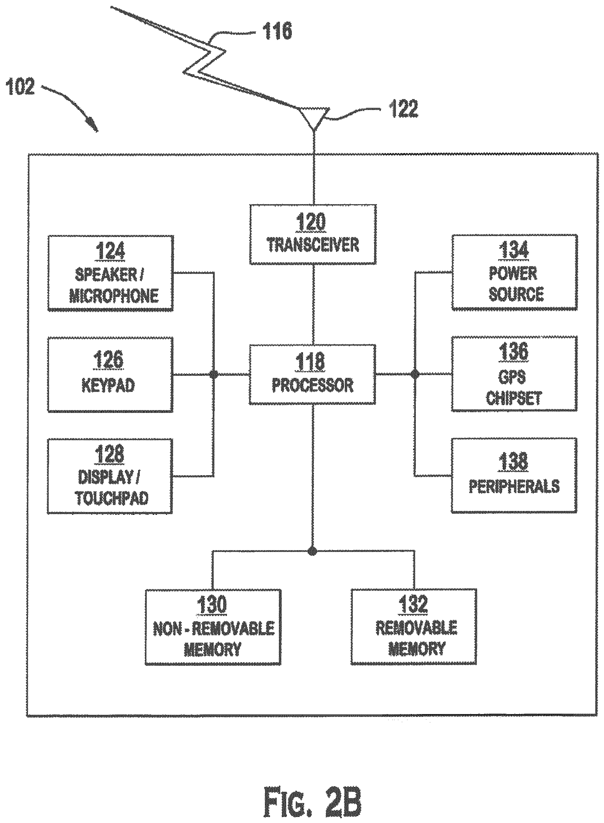

FIG. 2B is a system diagram of an example WTRU 102. As shown in FIG. 2B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and other peripherals 138. It will be appreciated that the WTRU 102 may include any sub-combination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 2B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 116. For example, in one embodiment, the transmit/receive element 122 may be an antenna configured to transmit and/or receive RF signals. In another embodiment, the transmit/receive element 122 may be an emitter/detector configured to transmit and/or receive IR, UV, or visible light signals, for example. In yet another embodiment, the transmit/receive element 122 may be configured to transmit and receive both RF and light signals. It will be appreciated that the transmit/receive element 122 may be configured to transmit and/or receive any combination of wireless signals.

In addition, although the transmit/receive element 122 is depicted in FIG. 2B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as UTRA and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 106 and/or the removable memory 132. The non-removable memory 106 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs or video), a universal serial bus (USB) port, a vibration device, a television transceiver, a hands free headset, a Bluetooth® module, a frequency modulated (FM) radio unit, a digital music player, a media player, a video game player module, an Internet browser, and the like.

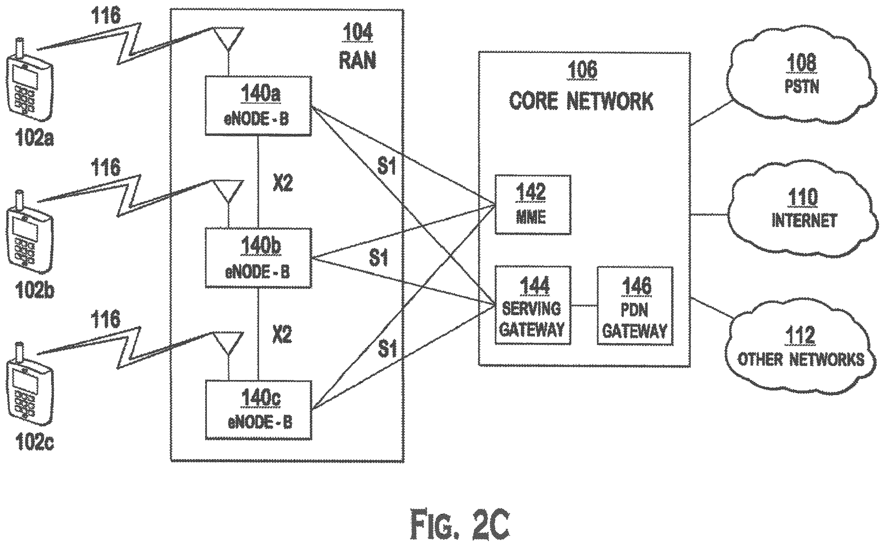

FIG. 2C is a system diagram of the RAN 104 and the core network 106 according to an embodiment. As noted above, the RAN 104 may employ an E-UTRA radio technology to communicate with the WTRUs 102a, 102b, 102c over the air interface 116. The RAN 104 may also be in communication with the core network 106.

The RAN 104 may include eNode-Bs 140a, 140b, 140c, though it will be appreciated that the RAN 104 may include any number of eNode-Bs while remaining consistent with an embodiment. The eNode-Bs 140a, 140b, 140c may each include one or more transceivers for communicating with the WTRUs 102a, 102b, 102c over the air interface 116. In one embodiment, the eNode-Bs 140a, 140b, 140c may implement MIMO technology. Thus, the eNode-B 140a, for example, may use multiple antennas to transmit wireless signals to, and receive wireless signals from, the WTRU 102a.

Each of the eNode-Bs 140a, 140b, 140c may be associated with a particular cell (not shown) and may be configured to handle radio resource management decisions, handover decisions, scheduling of users in the uplink and/or downlink, and the like. As shown in FIG. 2C, the eNode-Bs 140a, 140b, 140c may communicate with one another over an X2 interface.

The core network 106 shown in FIG. 2C may include a mobility management gateway (MME) 142, a serving gateway 144, and a packet data network (PDN) gateway 146. While each of the foregoing elements are depicted as part of the core network 106, it will be appreciated that any one of these elements may be owned and/or operated by an entity other than the core network operator.

The MME 142 may be connected to each of the eNode-Bs 142a, 142b, 142c in the RAN 104 via an S1 interface and may serve as a control node. For example, the MME 142 may be responsible for authenticating users of the WTRUs 102a, 102b, 102c, bearer activation/deactivation, selecting a particular serving gateway during an initial attach of the WTRUs 102a, 102b, 102c, and the like. The MME 142 may also provide a control plane function for switching between the RAN 104 and other RANs (not shown) that employ other radio technologies, such as GSM or WCDMA.

The serving gateway 144 may be connected to each of the eNode Bs 140a, 140b, 140c in the RAN 104 via the S1 interface. The serving gateway 144 may generally route and forward user data packets to/from the WTRUs 102a, 102b, 102c. The serving gateway 144 may also perform other functions, such as anchoring user planes during inter-eNode B handovers, triggering paging when downlink data is available for the WTRUs 102a, 102b, 102c, managing and storing contexts of the WTRUs 102a, 102b, 102c, and the like.

The serving gateway 144 may also be connected to the PDN gateway 146, which may provide the WTRUs 102a, 102b, 102c with access to packet-switched networks, such as the Internet 110, to facilitate communications between the WTRUs 102a, 102b, 102c and IP-enabled devices.

The core network 106 may facilitate communications with other networks. For example, the core network 106 may provide the WTRUs 102a, 102b, 102c with access to circuit-switched networks, such as the PSTN 108, to facilitate communications between the WTRUs 102a, 102b, 102c and traditional land-line communications devices. For example, the core network 106 may include, or may communicate with, an IP gateway (e.g., an IP multimedia subsystem (IMS) server) that serves as an interface between the core network 106 and the PSTN 108. In addition, the core network 106 may provide the WTRUs 102a, 102b, 102c with access to the networks 112, which may include other wired or wireless networks that are owned and/or operated by other service providers.

Hereafter, the terms "SCL" and "service capabilities" will be used interchangeable, unless it explicitly states that service capabilities mean a specific service capability. The terms "M2M server" and "server", "M2M control server" and "control server", "M2M data server" and "data server", "M2M gateway" and "gateway", and "M2M device" and "device" will be used interchangeably, respectively.

M2M service capabilities provide M2M functions that are to be shared by different applications. The M2M service capabilities expose functions through a set of open interfaces, use core network functionalities, and simplify and optimize application development and deployment through hiding of network specificities. The M2M service capabilities in the network domain, the gateway, and the device include application enablement, generic communication, reachability, addressing and repository, communication selection, remote entity management, security, history and data retention, transaction management, compensation broker, telco operator exposure, interworking proxy, etc. M2M applications are applications that run a service logic and use M2M service capabilities accessible via an open interface.

In the case where M2M devices reside behind an M2M gateway, the service capabilities may be distributed over the M2M system in a form of hierarchy. This hierarchical architecture may be generalized further if one considers that M2M gateways may exist behind other M2M gateways, and that network service capabilities may be replicated and shared between many M2M service providers. Sharing service capabilities may provide benefits such as reducing device overhead (e.g., an M2M device with limited hardware capacity would not need to support complex service capability functionalities and may make use of other service capabilities in the network).

The ETSI M2M standard uses RESTful architecture such that information is represented by resources which are structured as a tree. Representational state transfer (REST) is a style of software architecture for distributed systems such as World Wide Web. A RESTful architecture is about the transfer of representations of uniquely addressable resources. A resource is a uniquely addressable entity in the RESTful architecture. When handling resources in a RESTful architecture, there are four basic methods (called "verbs"). A CREATE method creates child resources. A RETRIEVE method reads the content of the resource. An UPDATE method writes the content of the resource. A DELETE method deletes the resource.

A resource has a representation that may be transferred and manipulated with the verbs. A resource may be addressed using a Universal Resource Identifier (URI). A sub-resource is a resource that has a containment relationship with the addressed (parent) resource. A sub-resource may be called a child resource. The parent resource representation contains references to the child resource. A hosting SCL is the SCL where the addressed resource resides. An issuer is the actor performing a request. An issuer may be either an application or an SCL.

The notation <resourceName> in the following description and the drawings means a placeholder for an identifier of a resource of a certain type, and the actual name of the resource is not predetermined. The notation "attribute" denotes a placeholder for one or more fixed names. Without the delimiters < and > or "and", names appearing in boxes in drawings may be literals for fixed resource names or attributes.

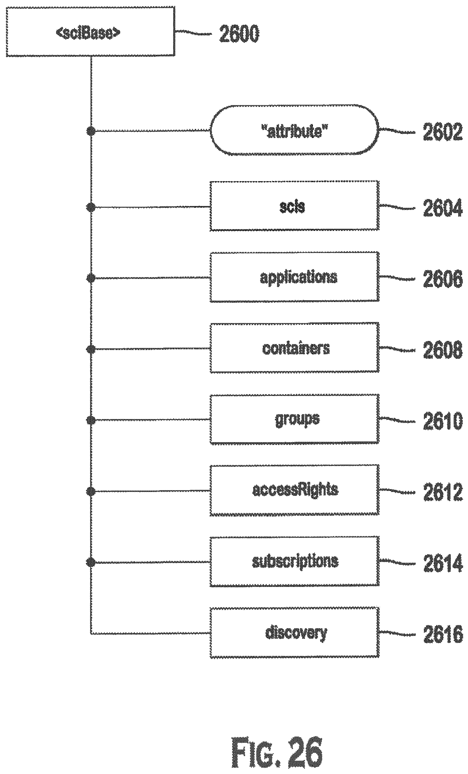

FIG. 26 shows an example sclBase resource structure. An sclBase resource 2600 is the root of all other resources and contains all other resources of the hosting SCL. The sclBase resource 2600 may be represented by an absolute URI. All other resources hosted in the SCL may be identified by a URI.

Attribute 2602 is meta-data that provides properties associated with a resource representation.

An SCL resource 2604 may represent an associated (remote) SCL that is authorized to interact with the hosting SCL. In order to be authorized to interact with the hosting SCL, the remote SCL may go through an M2M service registration procedure. An SCL resource 2604 may be created as a result of a successful registration of the remote SCL with its local SCL, or vice-versa.

An application resource 2606 may store information about the application. The application resource 2606 may be created as a result of successful registration of an application with the local SCL.

A container resource 2608 is a generic resource that may be used to exchange data between applications and/or SCLs by using the container as a mediator that takes care of buffering the data.

A group resource 2610 may be used to define and access groups of other resources. For example, a group resource may be used to write the same content to a group of M2M container resources .

An accessRight resource 2612 may store a representation of permissions. An accessRight resource 2612 is associated with resources that may be accessible to entities external to the hosting SCL.

A subscription resource 2614 may be used to keep track of status of active subscription to its parent resource. A subscription represents a request from the issuer to be notified about modifications on the parent resource.

A discovery resource 2616 may be used to allow discovery. It may be used to retrieve the list of URI of resources matching discovery filter criteria.

In the conventional ETSI M2M functional architecture, control and data paths are not separated and supposed to use the same transmission mechanism. Such approach may make control and data paths impact each other. For example, if there is a big volume of data stream between two M2M devices that is routed via an M2M server, it may delay other M2M devices to register with the M2M server. On the other hand, if there are many new M2M devices (normal or malicious) to register with the M2M server, the existing data transmission on the data path may be impacted and even stopped in the worst case.

The conventional ETSI M2M SCL registration is network-centric (i.e., NSCL-centric) and is limited to a DSCL registration to an NSCL and a GSCL registration to an NSCL. The impact of such limit is that the NSCL serves as an anchor point and there is no direct communication between some SCLs, such as DSCL to DSCL, DSCL to GSCL, GSCL to GSCL, or NSCL to NSCL.

The M2M servers (e.g., NSCLs in the ETSI M2M framework) may be owned by different businesses and a service provider. They may offer different service capability functionalities, and offer a complete service jointly. Therefore, NSCL-to-NSCL interaction is needed.

The M2M gateways belonging to the same service providers may need to have interactions to exchange control and user data. Such information does not need to go through their common NSCL for efficiency. In mobility scenarios, for example, when a device moves from one gateway to another, a direct communication between the gateways is needed.

In the case where multiple verticals are involved, a full scale of and diverse SCL interactions is needed. For example, a monitor in an eHealth system detected an emergency issue. The home gateway sends a message to the eHealth system to report the emergency. The eHealth system contacts emergency medical services (EMS) for an ambulance, and the ambulance system contacts the city traffic control system for route information. Here, there are three different kinds of SCLs: one for eHealth, one for EMS, and one for city traffic control system. Interactions among them are needed to perform necessary coordination to support the use case.

In one embodiment, new reference points and/or new operations on the reference points are defined to support SCL interactions based on the ETSI M2M architecture. Conventional reference points and application programming interface (API) operations may be supported and re-used.

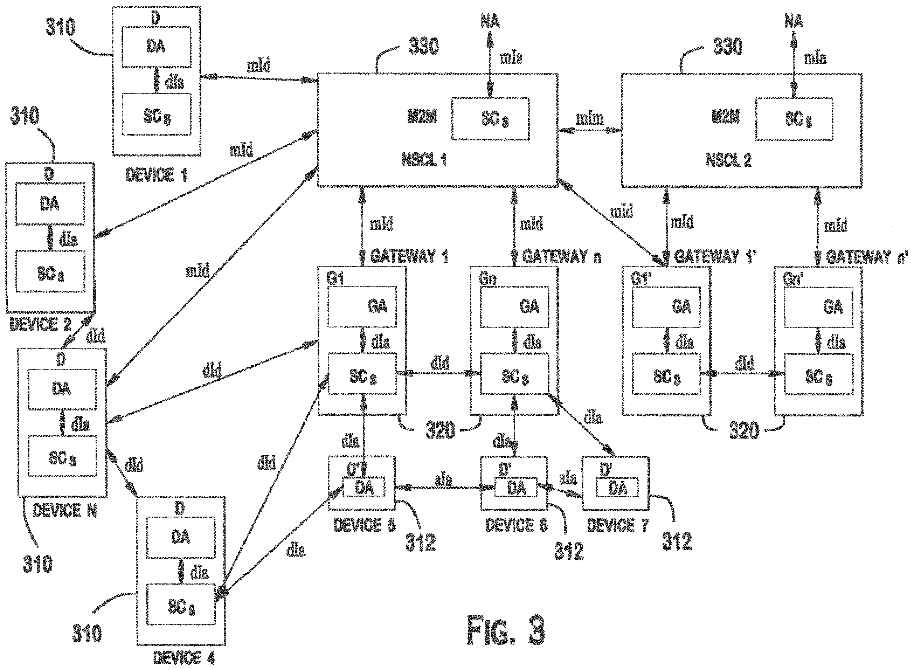

FIG. 3 shows an example M2M architecture with new reference points in accordance with one embodiment. The M2M architecture includes M2M devices 310/312, M2M gateways 320, and M2M servers 330. The M2M devices may be a WTRU. New reference points mIm, dId, dIa, and aIa are defined.

mIm is a reference point between two M2M servers 330 (i.e., NSCLs). Within the M2M architecture, the mIm reference point resides between two NSCLs to provide new service capability sharing and configuration functions. Within the scalable M2M architecture (SMA), which will be explained below, the mIm reference point may reside between two M2M control servers, between an M2M control server and an M2M data server, or between two M2M data servers to provide new functions, such as resource copy/move and charging.

dId is a reference point between a GSCL and a GSCL, or between a DSCL and a GSCL, or between a DSCL and a DSCL that is defined to support new functions such as capability sharing and resource copy/move.

dIa is a reference point between a DSCL and D' devices 312 that is defined to enable direct communications between a DSCL and D' devices 312 by leveraging dIa reference points with enhanced application registration.

ala is a reference point between D' devices 312. For example, D' devices may register with an M2M gateway 320 but the data may be exchanged between the D' devices 312 directly. Alternatively, one D' device may register with the M2M gateway 320 and other D' devices may register with the M2M gateway 320 through the D' device registered with the M2M gateway 320. The D/D' devices may exchange data directly with other D/D' devices.

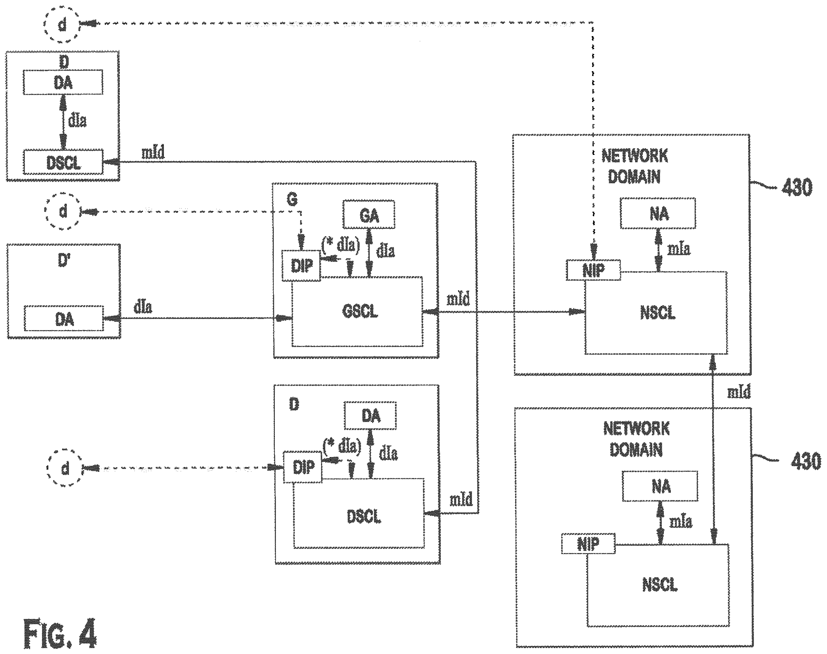

In another embodiment, instead of introducing new reference points, the conventional mId reference point may be re-used with extensions. FIG. 4 shows an example M2M architecture wherein mId reference points with extensions are used. For example, the mId reference point with extensions may be used for interactions between M2M servers 430.

In another embodiment, a scalable M2M architecture (SMA) may be implemented. In the SMA, the M2M server is split to an M2M data server and an M2M control server. One M2M control server may control one or multiple M2M data servers. The control path and the data path may be separated. The SMA may eliminate drawbacks in the conventional M2M functional architecture and may achieve better system reliability, scalability, and manageability.

In SMA, functions and procedures in the ETSI M2M architecture may be categorized into control functions and data functions. The control functions include, but are not limited to, M2M bootstrap, M2M SCL registration, M2M application registration, M2M resource discovery, and M2M remote entity management (REM), or the like. The data functions include other regular resource access such as operations on containers and groups resources.

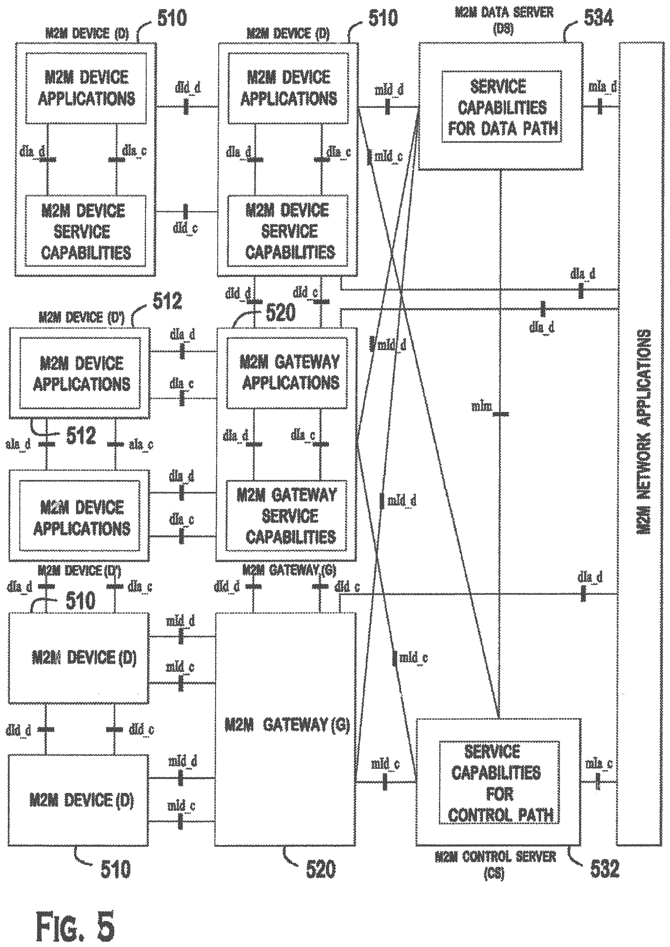

FIG. 5 shows an example scalable M2M architecture (SMA). The M2M network includes M2M devices (D devices 510 and/or D' devices 512), an M2M gateway(s) 520, an M2M control server(s) 532, and an M2M data server(s) 534. An M2M server is split into the M2M control server 532 and the M2M data server 534. Both the M2M control server 532 and the M2M data server 534 are logical entities. The M2M control server 532 has service capabilities for performing control functions including, but not limited to, bootstrapping, registration, resource discovery and management, and the like. The M2M data server 534 has service capabilities for M2M data functions and handles data path transmissions such as M2M data access and storage, etc. There are interactions between the M2M control server 532 and the M2M data server 534 via a reference point (e.g., mIm reference point). The M2M control server 532 may configure, monitor, and change the behaviors of the M2M data server 534.

In FIG. 5, the suffix "_d" stand for data path, and the suffix "_c" stands for control path. Control reference points and data reference points may use different transport protocol. For example, Transmission Control Protocol (TCP) and Stream Control Transmission Protocol (SCTP) may be used for control reference points to provide reliable transmission, while User Datagram Protocol (UDP) may be used for data reference points to provide lower overhead and latency.

mIm is a reference point between two M2M servers. The mIm reference point may be used for registration, authorization, subscription/notification between M2M servers, M2M point of contact (PoC) operations, management functions, capability/functionality sharing, SCL and application registration, copy or move resources, billing (e.g., requested services, traffic statistics, etc.), or the like.

dId_d is a reference point between two D devices or two M2M gateways for non-control operations. The dId_d reference point may be used for DSCL/GSCL retrieve and update on DSCL/GSCL container, content instances collection management, group management, group collection management, capability/functionality sharing, and the like.

dId_c is a reference point between two D devices or two M2M gateways for control operations. The dId_c reference point may be used for DSCL/GSCL gateway or device bootstrapping, SCL management, access right management, resource discovery, notification channels collection management, notification channel management, M2M PoCs and M2M PoCs collection management, capability/functionality sharing, or the like.

aIa_d is a reference point between two D' devices for data operations. The aIa_d reference point may be used for billing (e.g., traffic statistics), multi-hop data relaying, or the like.

aIa_c is a reference point between two D' devices for control operations. The aIa_c reference point may be used for DA bootstrapping operations, remote triggering, registration, resource discovery on DA, capability/functionality sharing, or the like.

mIa_d is a reference point between an NA and an M2M data server. The mIa_d reference point may be used for NA announce/de-announce, retrieve and update application, containers, content instances management and groups collection management, billing (e.g., traffic statistics), or the like.

mIa_c is a reference point between an NA and an M2M control server. The mIa_c reference point may be used for NA registration, authorisation, announce/de-announce, subscription and subscription collection management, access right management, resource discovery and remote entity management, capability/functionality sharing, application registration, or the like.

mId_d is a reference point between a DSCL/GSCL and an M2M data server. The mId_d reference point may be used for DSCL/GSCL, containers and content instances management, group and groups collection management, copy or move resources, billing (e.g., traffic statistics), or the like.

mId_c is a reference point between a DSCL/GSCL and an M2M control server and between a DSCL and a GSCL. The mId_c reference point may be used for DSCL/GSCL gateway or device bootstrapping, SCL management, access right management, resource discovery, notification channels collection management and notification channel management, M2M PoCs and M2M PoCs collection management, SCL registration, billing (e.g., requested services), capability or functionality sharing, or the like.

dIa_d is a reference point between a DA/GA and a DSCL/GSCL for non-control operations. The dIa_d reference point may be used for DA/GA announce/de-announce, containers and content instances management, group and groups collection management on DSCL/GSCL, billing (e.g., traffic statistics), or the like.

dIa_c is a reference point between a DA/GA and a DSCL/GSCL for control operations. The dIa_c reference point may be used for DA/GA bootstrapping operations, remote triggering, registration, resource discovery and remote entity management M2M PoCs and M2M PoCs collection management on DSCL/GSCL, capability/functionality sharing, application registration, or the like.

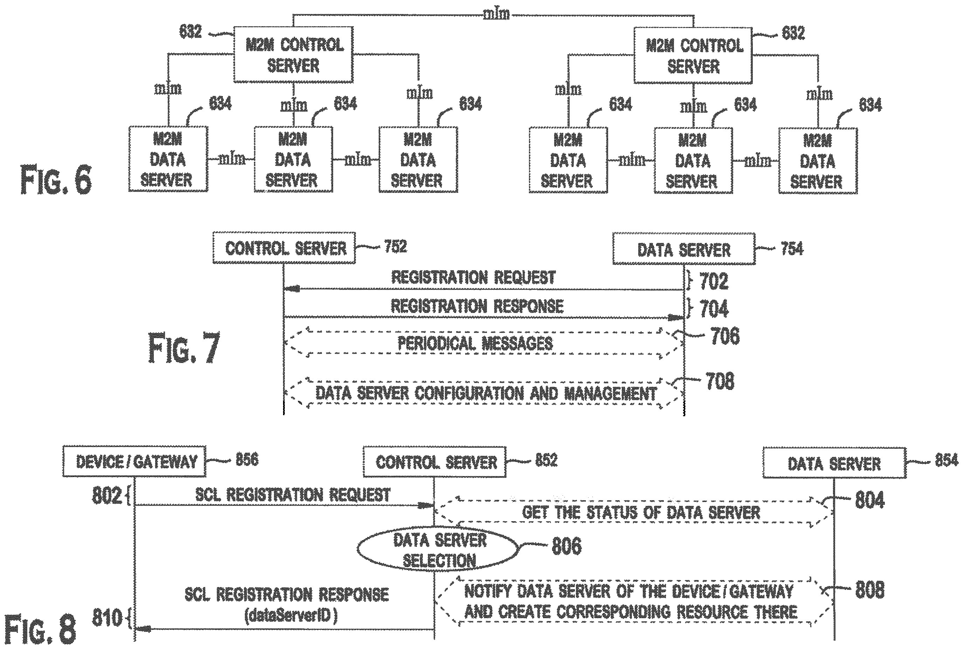

FIG. 6 shows an example structure that one M2M control server 632 controls multiple M2M data servers 634. As shown in FIG. 6, one M2M control server 632 may control multiple M2M data servers 634. An M2M control server may direct M2M devices or gateways from one M2M data server to another M2M data server for purposes such as load balancing or group operations. There may be security exchanges between the M2M control server 632 and the M2M data server 634, so that interactions between the M2M control server 632 and the M2M data server 634 may be secured and communications between the M2M data server 634 and the M2M devices, gateways, and applications may be secured. One M2M data server 634 may register itself with multiple M2M control servers 632.

Multiple M2M devices and/or gateways may operate in a group, for example where devices provide the same services or where devices are deployed for the same company. If the M2M devices are currently not under the same M2M data server, it may be difficult to perform a group operation efficiently. Therefore, the M2M control server may move a group of M2M devices/gateways to the same M2M data server.

If an M2M data server is at the risk of congestion, the M2M control server may move some M2M devices from the current M2M data server to other M2M data server. If one M2M data server goes down, M2M devices may move to another M2M data server. An M2M data server(s) may be used to back-up each other and have consistent images of each other, for example, using the mIm reference point.

In order to manage multiple M2M data servers, the M2M control server may maintain an M2M data server inventory to have a list of currently active M2M data servers. In one embodiment, each M2M data sever may register or attach itself to an M2M control server once it becomes online or active. In addition, the M2M control server and the M2M data server may periodically exchange messages so that the M2M control server may have real-time information about each M2M data server. In another embodiment, an M2M control server may dynamically discover M2M data servers using service discovery mechanism such as domain name system-service discovery (DNS-SD).

Splitting an M2M server into an M2M control server and an M2M data server may be extended to a GSCL and/or a DSCL. For example, a GSCL may be split to one control gateway (i.e., CGSCL) and one or more data gateway (i.e., DGSCL). The CGSCL may handle control-related GSCL functions, while the DGSCL may handle data-related GSCL functions. The CGSCL may register with the M2M control server (i.e., CNSCL), while the DGSCL may communicate with the M2M data server (i.e., DNSCL) directly. The same scheme may be applied to the DSCL.

The mIm reference point may handle interactions between M2M servers or between an M2M control server and an M2M data server. The mIm reference point may also handle interactions between two M2M data servers or between two M2M control servers.

The M2M control server may manage a set of M2M data servers. The M2M control server may enable direct communications between two M2M data servers. For example, the M2M control server may trigger to move data or resources from one M2M data server to another M2M data server. The M2M control server may pass M2M devices and gateways registration-related information to M2M data servers, so that the M2M data servers may authenticate messages and operations from the M2M devices and gateways.

For interactions between the M2M control server and the M2M data server, each M2M data server may first register with the M2M control server. FIG. 7 is a flow diagram of an example procedure for M2M data server registration with an M2M control server. The M2M data server 754 sends a registration request to the M2M control server 752 (702). The M2M control server 752 sends a registration response to the M2M data server 754 (704). After establishment of the registration (association), the M2M data server 754 and the M2M control server 752 may exchange periodic messages to maintain the association (706). The M2M control server 752 may configure, control, manage the behavior of the M2M data server 754 (708).

The configuration, control, and management operations may be performed through RESTful operations. Each M2M data server may provide management objects via which it may be managed by the M2M control server.

An SCL may register with multiple SCLs. For example, a device may be connected to multiple local gateways and may use different service capability functions in each of the gateways, (e.g., one for caching and one for security and addressability). A device may be roaming and its SCL may be registered to both home and visiting network cores. One to multiple SCL registration may happen at initial SCL registration (i.e., an SCL registers with multiple SCLs at the initial registration), or it may occur incrementally (i.e., an SCL initially registers with one SCL, and subsequently registers to multiple SCLs). Upon SCL registration, an SCL resource may be created on the target SCL for the requestor SCL.

An application may have one anchor SCL, or may register to multiple SCLs. An application may request different service capability functionalities from the SCLs it registers with. The different SCLs may exchange the information of the application.

Each time when an M2M device, gateway, or application registers itself with the M2M control server, the M2M control server may assign one or more M2M data server to the M2M device or gateway. FIG. 8 is a flow diagram of an example procedure for SCL registration. An M2M device/gateway 856 sends a registration request to an M2M control server 852 (802). The M2M control server 852 obtains the status of the M2M data server (804), and selects an M2M data server (806).

The M2M control server 852 may notify the M2M data server 854 or the M2M gateway 856 and may create corresponding resources locally (808). The M2M control server 852 may create or copy such resource into the M2M data server(s) 854 so that the M2M data server(s) 854 may authenticate messages and operations from the M2M device/gateway 856. The M2M control server 852 may send a registration response to the M2M device/gateway 856 (810). The M2M data server 854 may pass traffic statistics information to the M2M control server 852 for example, for charging. Alternatively, the M2M control server 852 may query the M2M data server 854 for such information.

Upon instruction from the M2M control server, an M2M data server may push or pull data or resources from another M2M data server, for example, for data replication, data mobility, etc. The direct communications between the M2M data servers may be managed and controlled by the M2M control server.

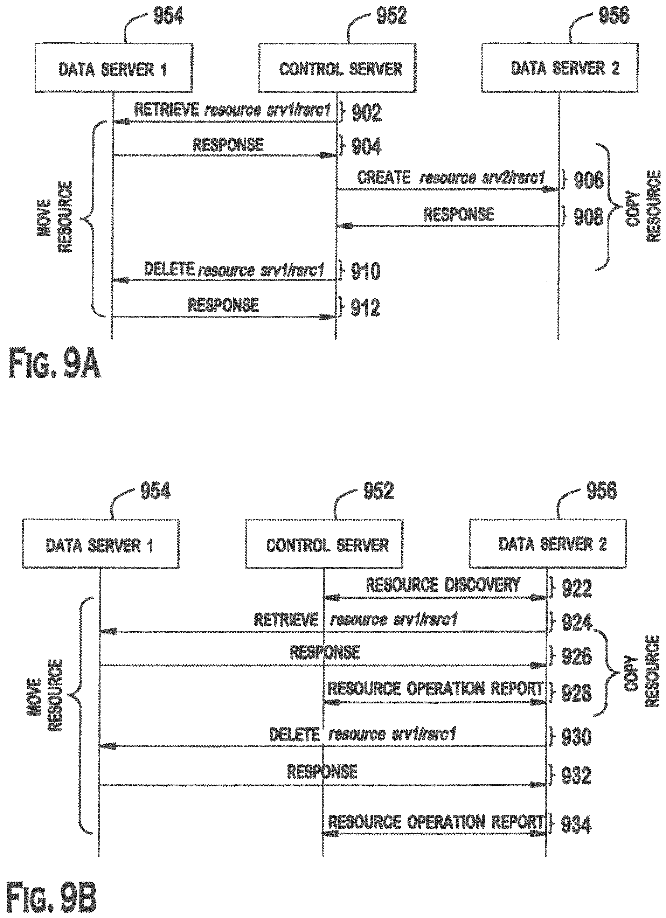

FIG. 9A is a signaling diagram of an example procedure for data move and copy operation wherein data is indirectly accessed between M2M data servers in accordance with one embodiment. An M2M control server 952 sends a retrieve request to an M2M data server 954 (902). The request addresses a specific resource of the hosting SCL. A hosting SCL is the SCL where the addressed resource resides. The M2M data server 954 returns the requested information in a response to the M2M control server 952 if it is verified that the requested resource exists and retrieval of the resource is allowed (904). The M2M control server 952 then sends a create request to the M2M data server 956 (906). The M2M data server 956 creates a resource in a resource tree and sends a response to the M2M control server 952 (908). The M2M control server 952 sends a delete request to the M2M data server 954 (910). The M2M data server 956 deletes the resource and sends a response to the M2M control server (912).

FIG. 9B is a signaling diagram of an example procedure for data move and copy operation wherein data is directly accessed between M2M data servers in accordance with one embodiment. The M2M control server 952 and the M2M data server 956 perform resource discovery (922). The resource discovery procedure allows discovering of resources residing on an SCL. The hosting SCL responds to the issuer with the appropriate URIs list of discovered resources in the hosting SCL. An issuer is the actor performing a request. An issuer may be either an application or an SCL.

Once the resource is discovered (in this example data server 954), the M2M data server 956 sends a retrieve request to the data server 954 (924). The M2M data server 954 sends a response to the M2M data server 956 (926). The M2M data server may send a resource operation report to the M2M control server 952 (928). The M2M data server 956 sends a delete request to the M2M data server 954 (930). The M2M data server 954 deletes the resource and sends a response to the M2M data server 956 (932). The M2M data server 956 may send a resource operation report to the M2M control server 952 (934).

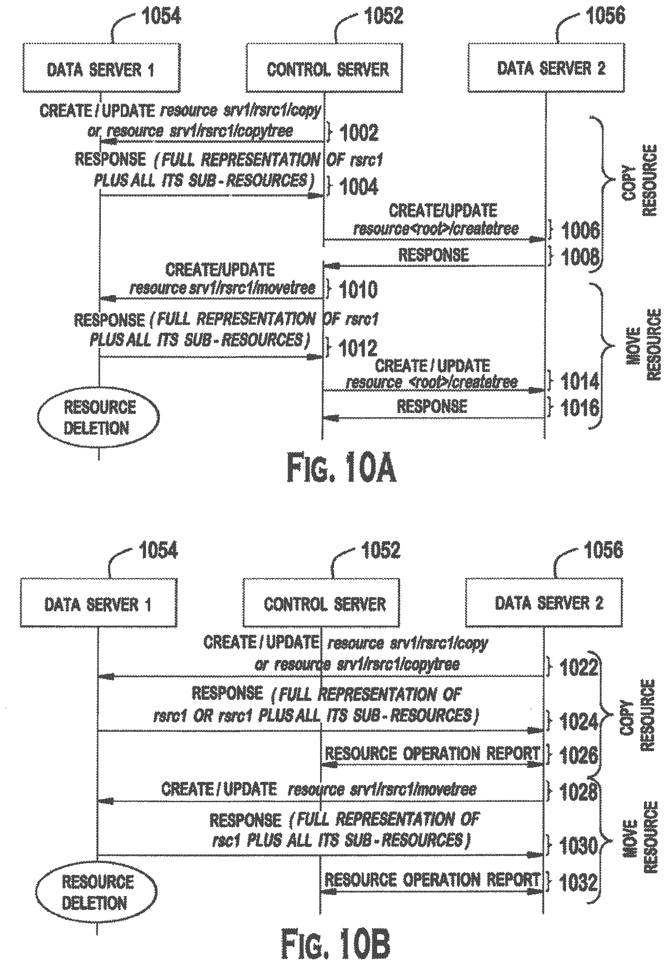

FIG. 10A is a signaling diagram of an example procedure for data copy and move operations wherein data is accessed indirectly between M2M data servers in accordance with another embodiment. The M2M control server 1052 sends a create/update request to the M2M data server 1054 with copy or copytree attribute (1002).

The whole resource including a sub-tree may be moved, copied, or created by one message or operation. The "copy" attribute is used to copy the single resource. The "copytree" attribute is used to copy the whole sub-tree under the requested resource including the requested resource. The "movetree" attribute is used to move the whole sub-tree under the requested resource including the requested resource. The "createtree" attribute is used to create a sub-tree under the requested resource. The above attributes may be triggered by using CREATE or UPDATE method.

The M2M data server 1054 sends a full representation of the requested resource in a response to the M2M control server 1052 (1004). The M2M control server 1052 sends a create/update request to the M2M data server 1056 with createtree attribute (1006). The M2M data server 1056 creates the resource tree and copies the resource and sends a response to the M2M control server 1052 (1008). For the movetree operation, the M2M control server 1052 sends a create/update request with movetree attribute to the M2M data server 1054 (1010). The M2M data server 1054 sends a full representation of the requested resource in a response to the M2M control server 1052 and deletes the resource and deletes the resource (1012). The M2M control server 1052 sends a create/update request with createtree attribute to the M2M data server 1056 (1014). The M2M data server 1056 creates the resource tree and copies the resource and sends a response to the M2M control server 1052 (1016).

FIG. 10B is a signaling diagram of an example procedure for data move and copy operation wherein data is accessed directly between M2M data servers in accordance with another embodiment. The M2M data server 1056 sends a create/update request with copy or copytree attribute to the M2M data server 1054 (1022). The M2M data server 1054 sends a full representation of the resource in a response to the M2M data server 1056 (1024). The M2M data server 1056 creates a resource tree, copies the resources, and may send a resource operation report to the M2M control server 1052 (1026). For movetree operation, the M2M data server 1056 sends a create/update request with movetree attribute to the M2M data server 1054 (1028). The M2M data server 1054 sends a full representation of the requested resource in a response to the M2M data server 1056 and deletes the resource (1030). The M2M data server 1056 creates a resource tree, copies the resource, and may send a resource operation report to the M2M control server 1052 (1032).

There may be some implications to resource discovery by copying and moving resources from one data server to another data server. For example, the moved resource may have been announced previously. After it is moved to another data server, the previously announced resource becomes invalid and the old data server may perform de-announcement and perform announcement update to reflect the new location of the moved resource. As shown in FIGS. 9B and 10B, the data server may report the results of "resource copy/move" to the control server via a resource operation report (928, 934, 1026, 1032), so that the control server may update its announced resource record.

It should be noted that even though FIGS. 9A, 9B, 10A, and 10B describe the procedures for resource copy and move between two data servers, the same procedures may be applied to copy or move resources between two M2M gateways or two M2M devices, (e.g., in M2M mobility).

In the context of ETSI M2M, both a control server and a data server may be treated as an NSCL. In other words, both a control server and a data server may create and maintain an sclBase tree (as shown in FIG. 26), but with some differences, because they handle different functions. The control server handles control-related functionalities such as SCL registration, application registration, resource discovery, management, or the like. The data server mainly deals with data functionalities such data storage and access. The data server needs to register itself with one or more control servers.

The resources <dsclBase> and <gsclBase> (i.e., the root resource of the device and gateway, respectively) need new resources and attributes to represent the list of data servers. Each DSCL/GSCL may get a list of assigned data servers which they may access, when it registers with an M2M control server. As an alternative, the control server may update or re-assign new data server to an M2M device or gateway.

In one embodiment, a new resource "dataServers" is introduced. It is a collection of data servers assigned to the device or gateway.

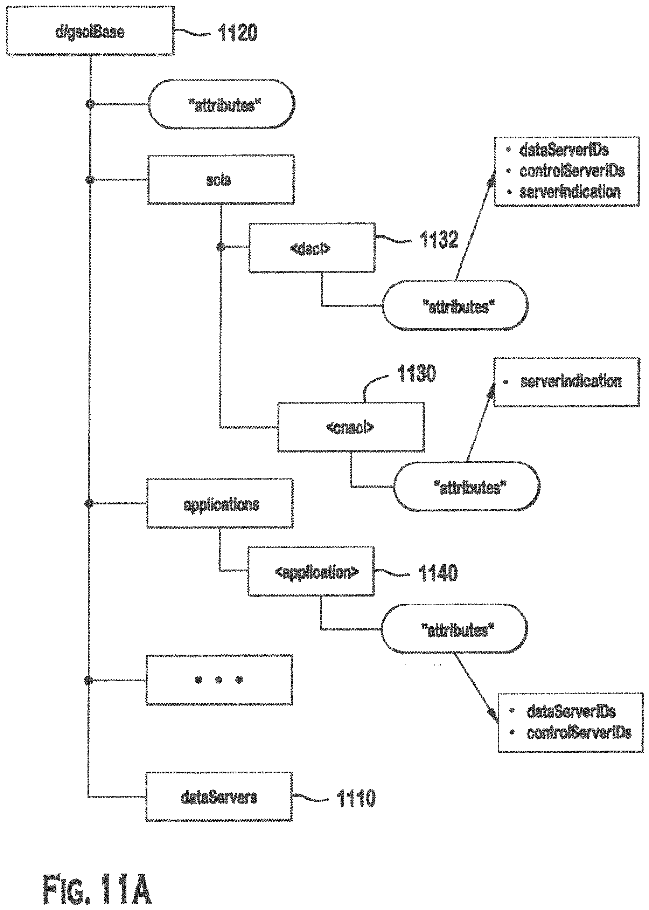

The resource "dataServers" may be centralized. FIG. 11A shows an example resource structure including a centralized resource "dataServers" 1110. The resource "dataServers" 1110 may be placed as a direct sub-resource of <dsclBase> or <gsclBase> 1120.

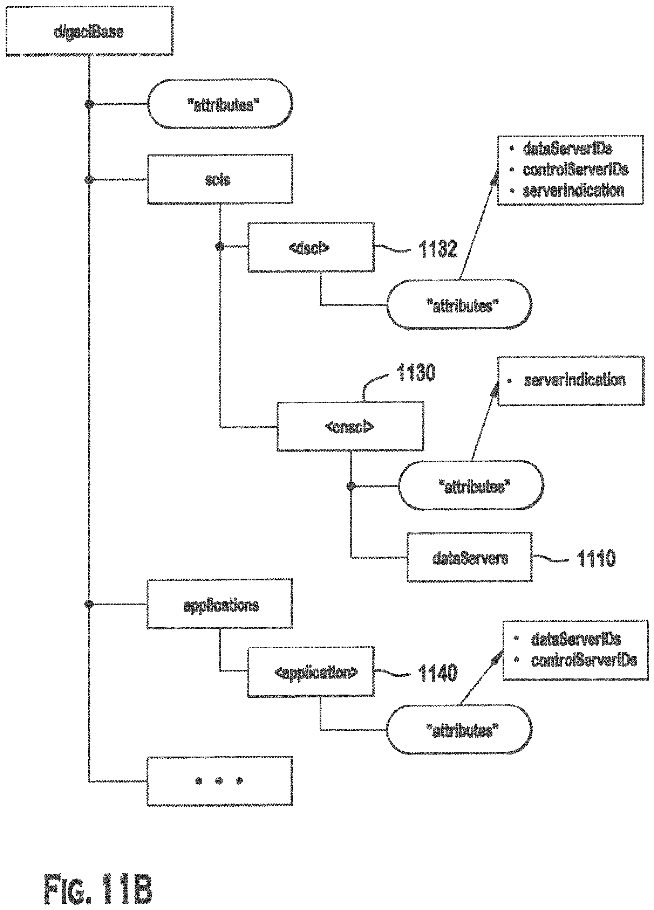

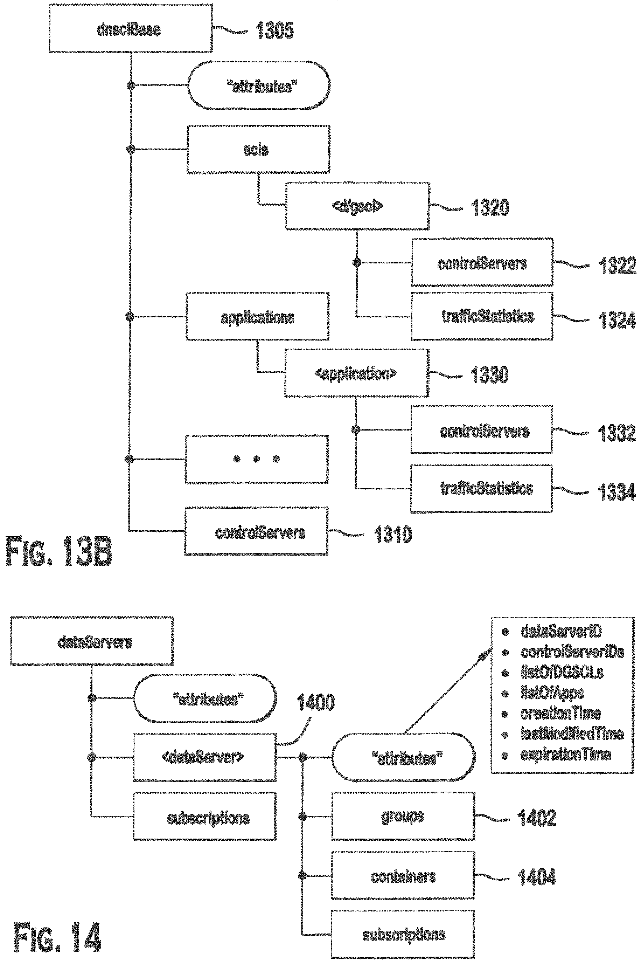

Alternatively, the resource "dataServers" may be distributed. FIG. 11B shows an example resource structure including distributed resource "dataServers" 1110. The resource "dataServers" 1110 may be placed as a direct sub-resource of <cnscl> 1130. <cnscl> stands for the control server which the device/gateway registers with. If a device/gateway registers with multiple control servers, there may be multiple <cnscl> and accordingly multiple "dataServers." The structure of resource "dataServers" is shown in FIG. 14.

Referring to FIGS. 11A and 11B, each <scl> 1130, 1132 in <d/gsclBase> tree may have new attributes: dataServerIDs, controlServerIDs, and/or serverIndication.

dataServerIDs is the list of data server IDs assigned to the <scl>. Each dataServerID points to a data server contained in the resource "dataServers" 1110.

controlServerIDs is the list of control server IDs assigned to the <scl>. Each controlServerID points to a <cnscl> under <d/gsclBase/<scls>. A <scl> representing a control server may not have this attribute.

serverIndication is a flag to show if <scl> is <cnscl> or <d/gscl>. If it is a <d/gscl>, this attribute may also indicate if this <d/gscl> has server capability to support hierarchical service structure, i.e., to show if the device/gateway represented by this <scl> has other D/GSCL behind it. The serverIndication attribute may not be used.

Each <application> 1140 in <d/gsclBase> tree may have new attributes: dataServerIDs and controlServerIDs. dataServerIDs is the list of data server IDs assigned to this <application>. Each dataServerID points to a data server contained in the resource "dataServers" 1110. controlServerIDs is the list of control server IDs assigned to this <application>. Each controlServerID points to a <cnscl> under <d/gsclBase/<scls>.

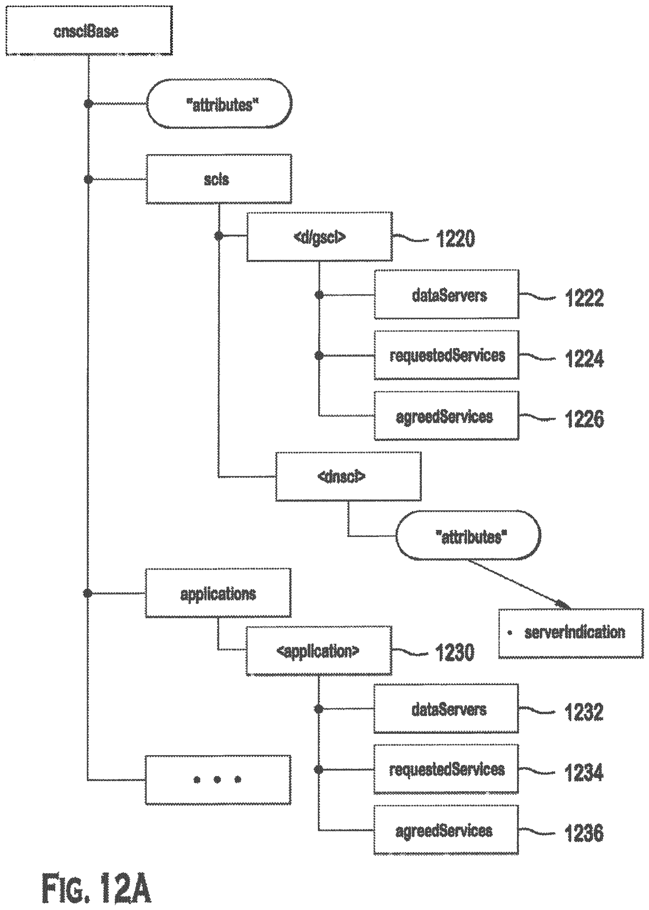

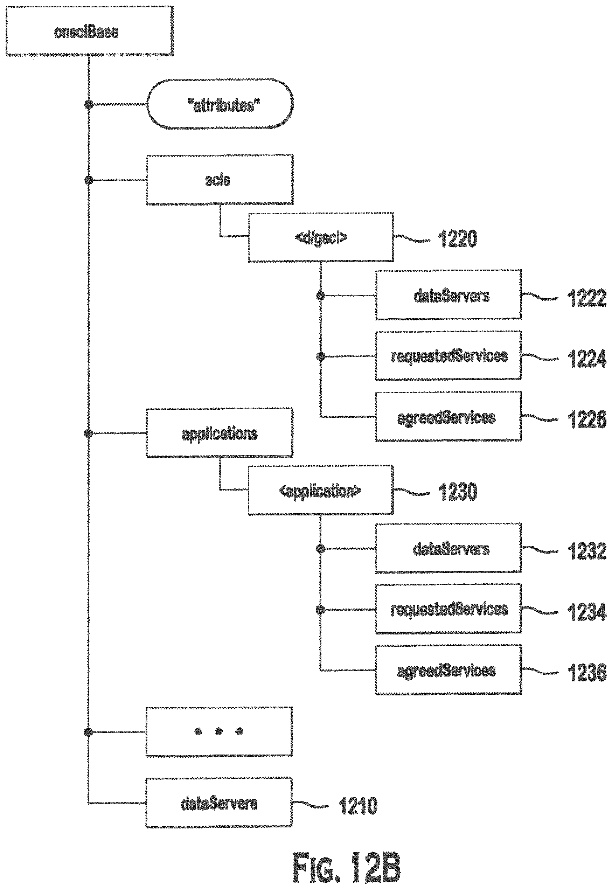

FIGS. 12A and 12B show an example sclBase tree structure for an M2M control server (i.e., <cnsclBase>). The control server may maintain a list of data servers which are associated or registered with the control server.

In FIG. 12A, the <scl> resource structure is used to represent a data server by adding a new attribute "serverIndication" to show if this <scl> is a data server or not.

In FIG. 12B, a separate resource "dataServers" 1210 is introduced as a sub-resource of <cnsclBase> as a collection to maintain data servers, which are associated with the control server. The structure of resource "dataServers" is shown in FIG. 14.

As shown in FIGS. 12A and 12B, each <d/gscl> 1220 under <cnsclBase> may have sub-resources "dataServers"1222, "requestedServices" 1224, and "agreedServices" 1226. "requestedServices" 1224 represents which type of service a D/GSCL or an application requests. For example, a service type may stand for a set of service capabilities, a service class with flat-based charging, a service class with usage-based charging, or the like.

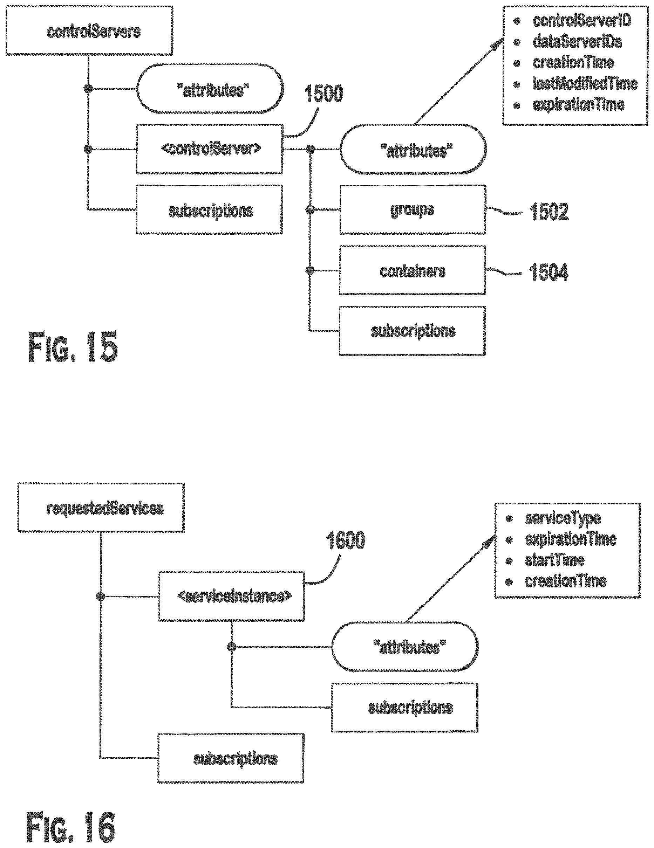

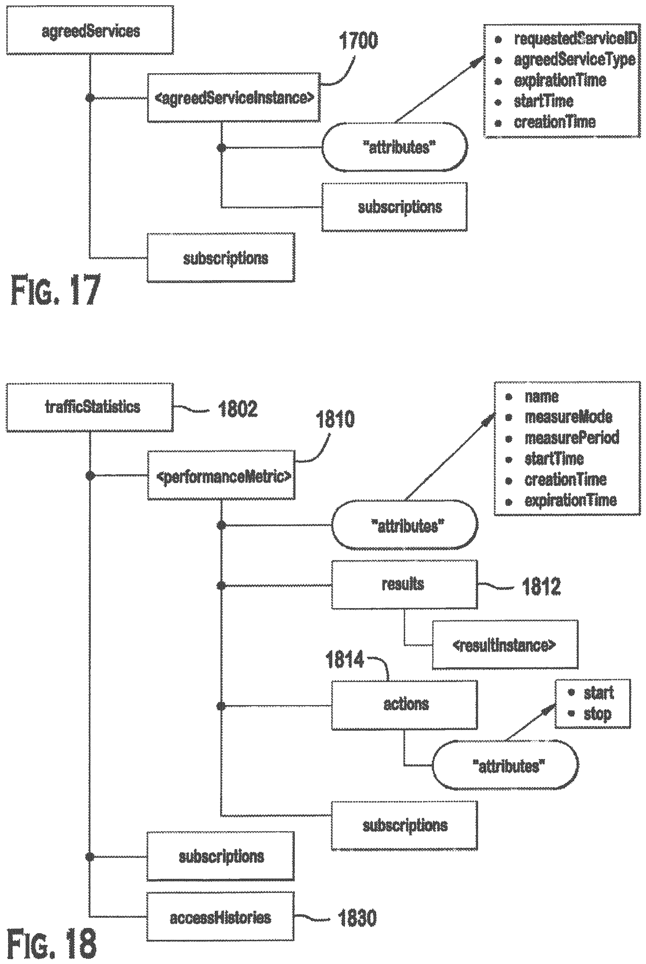

Each <application> 1230 under <cnsclBase> may have sub-resources "dataServers" 1232, "requestedServices" 1234, and "agreedServices" 1236. FIG. 16 shows the structure of "requestedServices" 1224/1234, and FIG. 17 shows the structure of "agreedServices" 1226/1236. Each <scl> under <cnsclBase> may not have data-related resources such as containers.

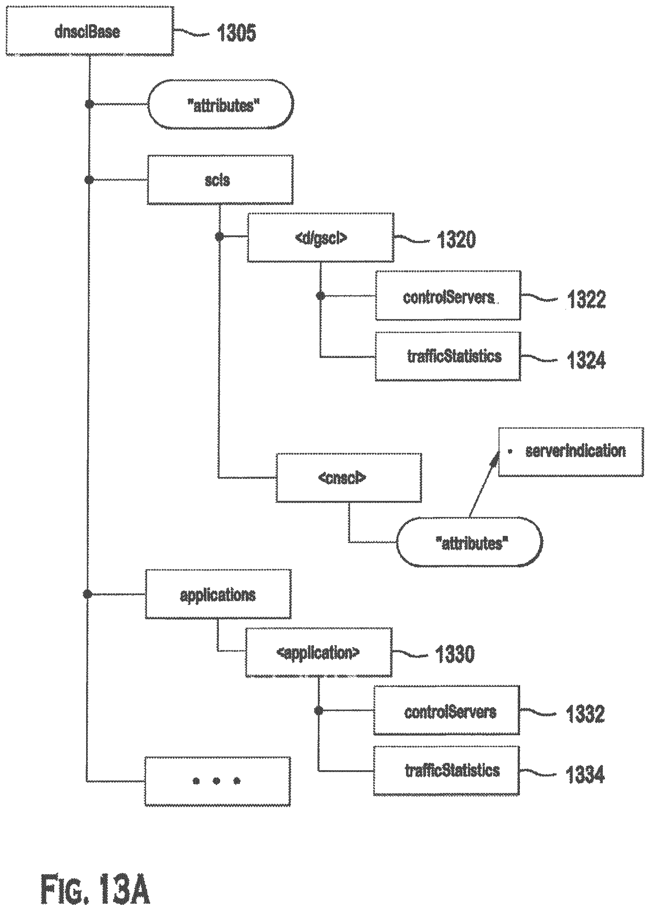

FIGS. 13A and 13B show an sclBase tree structure for data server (i.e., <dnsclBase> 1305). The data server may maintain a list of control servers which it registers with. In one embodiment, as shown in FIG. 13A, the <scl> resource structure may be used to represent a control server by adding a new attribute "serverIndication" to show if this <scl> is a control server or not.

Alternatively, as shown in FIG. 13B, a separate resource "controlServers" 1310 may be introduced as a sub-resource of <dnsclBase> 1305 as a collection to maintain data servers, which are associated with the control server.

Each <d/gscl> 1320 under <dnsclBase> may have two sub-resources "controlServers" 1322 and "trafficStatistics" 1324. Each <application> 1330 under <dnsclBase> may have a sub-resource "controlServers" 1332 and "trafficStatistics" 1334, for example, for charging purpose. Each <scl> under <dnsclBase> may have data-related resources such as containers.

FIG. 14 shows an example structure of resource "dataServers". dataServers is a collection resource, which includes multiple <dataServer> instances. Each <dataServer> instance 1400 may have the following attributes: dataServerID, controlServerID, listOfDGSCLs, listOfApps, creationTime, lastmodifiedTime, and expirationTime. dataServerID stands for the ID of this <dataServer>. controlServerID stands for the ID of the control server this <dataServer> registers with. In case where the <dataServer> registers with multiple control servers, this attribute stands for a list of controlServerID. listOfDGSCLs is a list of <d/gscl> which are assigned to this <dataServer>. listOfApps is a list of <application> which are assigned to this <dataServer>.

The resource "dataServers" may be a sub-resource of <scl>, <application>, or <cnsclBase>. For the <cnsclBase>/dataServers, <dataServer> may also have sub-resources "groups" 1402 for data server to create groups on the control server, and "containers" 1404 for data server to create containers on the control server, so that each data server may create groups and containers on their control servers.

FIG. 15 shows an example structure of resource "controlServers." controlServers is a collection resource, which includes multiple <controlServer> instances. Each <controlServer> instance 1500 may have the following attributes: controlServerID, dataServerIDs, creationTime, lastmodifiedTime, and expirationTime. controlServerID stands for the ID of this <controlServer>, and dataServerIDs stands for the ID of the data server this <controlServer> has. In case where this <controlServer> has multiple data servers, this attribute may stand for a list of dataServerIDs.

The resource "controlServers" may be a sub-resource of <scl>, <app>, or <dnsclBase>. For the <dnsclBase>/controlServers, <controlServer> may also have sub-resources "groups" 1502 for the control server to create groups on the data server and "containers" 1504 for the control server to create containers on the data server, so that each control server may create groups and containers on their data servers.

FIG. 16 shows an example structure of resource "requestedServices." "requestedServices" describes which service types that a <d/gscl> or an <application> requests. It is a collection of <serviceInstance>. Each <serviceInstance> 1600 may have the following attribute: serviceType, expirationTime, startTime, and creationTime. serviceType stands for the class or the type of the service. Each service type may have some sub-attributes including performance requirements (such as delay, throughput, packet loss ratio, etc.), billing properties (such as flat-rate, usage-based, free, etc.), and usage bounds (such as maximum storage size, maximum traffic volume, etc.). expirationTime stands for the ending time, by then this <serviceInstance> will become invalid as requested. startTime stands for the starting time that this <serviceInstance> will start as requested. creationTime stands for the creation time of this <serviceInstance>.

FIG. 17 shows an example structure of resource "agreedServices." "agreedServices" describes which service types are approved to a <d/gscl> or an <application>. It is a collection of <agreedServiceInstance>. Each <agreedServiceInstance> 1700 may have the following attribute: requestedServiceID, agreedServiceType, expirationTime, startTime, and creationTime. requestedServiceID indicates the reference to a requested service instance stored in "requestedServices". agreedServiceType stands for the class or the type of the agreed service. Each agreed service type may have some sub-attributes including performance requirements (such as delay, throughput, packet loss ratio, etc.), billing properties (such as flat-rate, usage-based, free, etc.), and usage bounds (such as maximum storage size, maximum traffic volume, etc.). expirationTime stands for the time by then this <serviceInstance> will become invalid as agreed. startTime stands for the starting time that this <serviceInstance> will start as agreed. creationTime stands for the creation time of this <serviceInstance>.

FIG. 18 shows an example structure of "trafficStatistics" resource 1802. trafficStatistics may have multiple <performanceMetric> 1810 sub-resources and one accessHistories 1830 sub-resource. Each <performanceMetric> 1810 may have the following attributes: name, measureMode, measurePeriod, startTime, creationTime, and expirationTime. Name indicates the name of this <performanceMetric>. It may be delay, delay jitter, throughput, packet loss ratio, or the like. measureMode stands for how this <performanceMetric> may be measured. It may be periodically or one-time up-to-date average measurement, minimum or maximum value, etc. measurePeriod stands for the period for each measurement. startTime stands for when this <performanceMetric> starts to be measured. creationTime is the time when this <performanceMetric> is created. expirationTime is the time when <performanceMetric> is expired.

Each <performanceMetric> 1810 may have sub-resource "results" 1812 to store measurement values. Each <resultInstance> stands for a value. Each <resultInstance> may have two attributes: startTime and endTime. startTime is the start time of the <resultlnstance> and endTime is the end time of the <resultInstance>.

Each <performanceMetric> 1810 may have sub-resource "actions" 1814, which has two attributes (start and stop) to start or stop the measurement by using UPDATE or CREATE method on those two attributes. Attribute start is for starting the measurement, and attribute stop is for stopping the measurement.

As alternative embodiments, the resources "requestedServices", "agreedServices", and "trafficStatistics" may be directly applied to the conventional ETSI M2M resource structure, (e.g., adding them as a sub-resource of <scl> and <application>), to provide charging and billing function.

A new attribute may be added for the application to indicate if its data may be distributed to other SCLs, besides the hosting SCL. For example, an attribute "Local" may be used. By using this attribute, the application that registered to an SCL (i.e., the hosting SCL) may indicate and decide whether its data may distributed to other SCLs besides the hosting SCL. The attribute "Local" may be a Boolean value. For example, when it is set to "1", it means the data is available only at the hosting SCL. Alternatively, the attribute may be a reference to sub-resource containers.

Privacy control may be performed when data is shared in distributed SCLs. Access rights may be created as resources, and each access right resource's URI may become the AccessRightID associated with different resources. The access right resource defines who may do what (e.g., READ, WRITE, CREATE, DELETE, DISCOVER, etc.).

When two SCLs are owned by different businesses, they may not be able to establish an access right completely. The application who creates the data on a hosting SCL may decide the general rule of whether the data may be shared.

In one embodiment, when an SCL owned by a different service provider is registered to a hosting SCL, the hosting SCL may create or update the access right resources to define the access right for the SCL belonging to another SCL. The hosting SCL may apply the AccessRightID to different resources in its resource tree.

To enhance the access right protection over distributed SCLs, (e.g., over SCLs owned by different service providers), the conventional access right permissions and flags may be extended. New "permissionFlags" values that indicates an access mode may be defined to support additional operations. Table 1 shows example permissionFlag values. A new "externalPermissions" attribute may be introduced to define permissions for SCLs owned by different service providers. If the attribute "externalPermissions" is absent, the entities that correspond to ancestor resources may have no permissions.

**Table 1**

| TypeName | Values |
|---|---|
| PermissionFlag | "READ": read enabled |
| | "WRITE": write enabled |
| | "DELETE": deletion enabled |
| | "CREATE": create child enabled |
| | "MOVE": move a resource enabled |
| | "MOVETREE": move a resource and its subresources enabled |
| | "READTREE": read a resource and its subresources enabled |
| | "WRITETREE": write a resource and its subresources enables |
| | "DELETETREE": delete a resource and its subresources enabled |
| | "CREATETREE": create a resource and its subresources enabled |
| | "DISCOVER": discovery enabled |

Service capabilities are the functionalities that one SCL supports. Among the various service capabilities defined by ETSI M2M standard, an SCL may not support all service capabilities and may rely on capabilities provided by different SCLs. Before sharing the detail of the service capabilities, SCLs may register with the other SCL or mutually register with each other depending on the requirement like whether both want to share the capabilities or just one SCL wants to get support from other SCL. There may be security exchanges between two SCLs that establish a shared capability. Capability sharing may be performed by NSCLs, GSCLs, and DSCLs by sharing the detail of the capabilities they support and the capabilities they want to share.

Service capability sharing may be transparent to other M2M entities such as M2M devices and M2M network applications, which use the shared service capabilities. In other words, the original SCL which shares service capabilities from other SCLs may be kept in the loop and may control related procedures. For example, suppose NSCL1 shares or gets extra service capabilities (e.g., remote entity management (REM)) from NSCL2. There is an M2M network application (NA1) and an M2M device (Dev1) registered with NSCL1. Since NSCL1 does not have REM, it may rely on the REM in NSCL2 to manage Dev1. NA1 may still issue a management command to NSCL1, and NSCL1 may forward the management command to NSCL2. From there on, NSCL2 may use its REM to manage Dev1 on behalf of NSCL1 and get a response back from Dev1. NSCL2 may forward a management response back to NSCL1 and NSCL1 may forward the response to NA1. In this process, both request and response messages may pass through, and under the control of, NSCL1, and both Dev1 and NA1 may not need to be aware of the existence of NSCL2.

In another example, DSCL1 may register with NSCL1. NSCL1 may have a shared container management service capability with NSCL2. NSCL1 and NSCL2 negotiate and configure such capability while they are registered with each other. NSCL2 may conduct container management for DSCL1 even though DSCL1 is not registered with NSCL2.

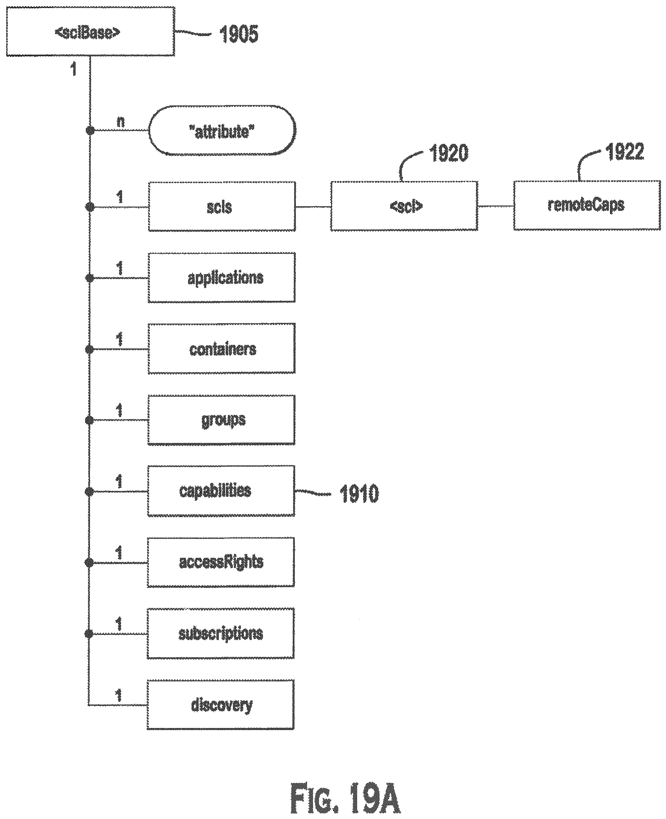

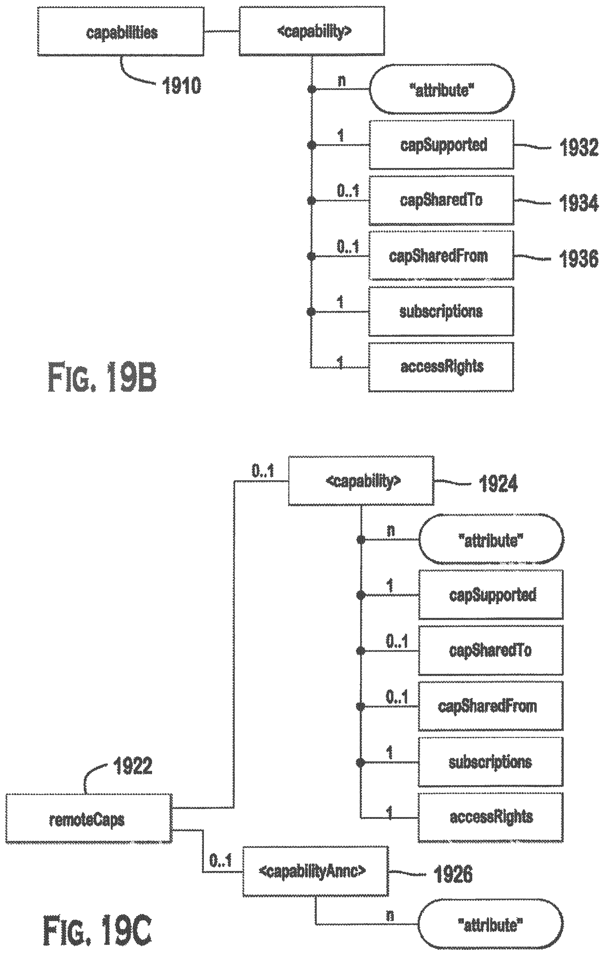

In one embodiment, capability management resources may be added to the SCL resource tree to facilitate and maintain the SCL-SCL interaction and sharing of capabilities. FIG. 19A shows an example resource for capability management under <sclBase>. FIG. 19B shows an example structure of resource "capabilities." FIG. 19C shows an example structure of resource "remoteCaps." The resource structures in FIGS. 19A-19C add the feature for SCLs to be able to keep the details for the capabilities/functionalities that it shared with another SCL. The SCL may track the capabilities/functionalities supported by itself.

A collection resource called "capabilities" 1910 may be added to the resource tree <sclBase> 1905 (as shown in FIG. 19A). The "capabilities" resource 1910 may be used to track the capability sharing of the current SCL with other SCLs. Under each instance of <scl> 1920, there may be a resource "remoteCaps" 1922, which records the capabilities of the remote SCLs registered with the current SCL base.

Referring to FIG. 19B, the "capabilities" resource 1910 may contain one or multiple instances called <capability>, where each <capability> instance is the capability sharing agreement with another SCL. For each instance of <capability>, it may have capSupported 1932, capSharedTo 1934, and capSharedFrom 1936. "capSupported" 1932 indicates the capabilities supported by the current SCL, (e.g., registration). "capSharedTo" 1934 indicates what capabilities that the current SCL may provide to other SCLs and to what entities these capabilities may be shared, (e.g., data management). "capSharedFrom" 1936 indicates what capabilities that the current SCL obtained from other SCLs and from which entities respectively.

Referring to FIG. 19C, under the resource "remoteCaps" 1922, a remote SCL which registered with the current SCL may either provide its capability in a <capability> instance 1924, or may announce its capability by providing a link of its capability URI in the "attribute" under <capabilityAnnc> 1926.

Procedures for the operations of different SCL service capability configurations are described hereafter. The operations may apply to control plane reference points.

Before sharing the service capabilities, SCLs may register with the other SCL. The registration may be mutual or unidirectional depending on the requirement. For example, if only one SCL wants to share the capability with other SCL, mutual registration may not be needed. If the NSCLs that want to share capabilities belong to two different service providers, the NSCLs may perform security procedures before sharing service capabilities. For example, they may use shared password or some known key to authenticate each other during registration procedure.

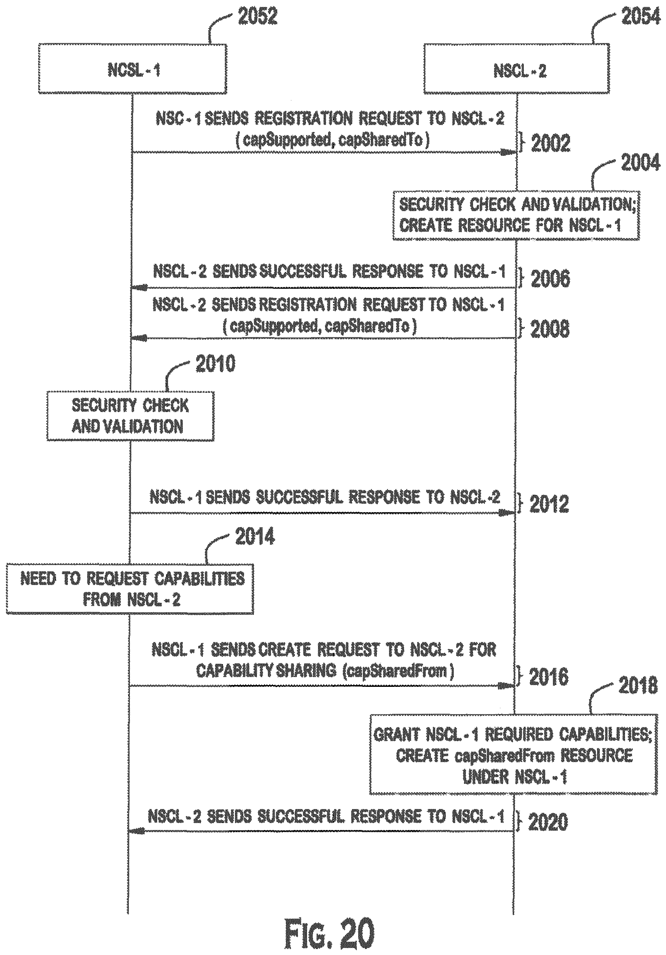

FIG. 20 is a signaling diagram of an example procedure for capability sharing with mutual registration. NSCL-1 2052 sends a registration request (e.g., CREATE) to NSCL-2 2054 (2002). In the request message, NSCL-1 2052 may include capability information, including capSupported and/or capSharedTo. NSCL-2 2054 knows the capabilities available from NSCL-1 2052 from capSharedTo. NSCL-2 2054 may perform the security checks to authenticate the communication of NSCLs and if authenticated may create a resource for NSCL-1 2052 (2004). If NSCL-1 2052 is not allowed to communicate with NSCL-2 2054, the request may be rejected. NSCL-2 2054 then sends a response to NSCL-1 2052 (2006).

For mutual registration, NSCL-2 2054 sends a registration request (e.g., CREATE) to NSCL-1 2052 (2008). In the request message, NSCL-2 2054 may include capability information, including capSupported and/or capSharedTo. NSCL-1 2052 knows the capabilities available from NSCL-2 2054 from capSharedTo. NSCL-1 2052 may perform the security checks to authenticate the communication of NSCL-2 2054 (2010). If NSCL-2 2054 is not allowed to communicate with NSCL-1 2052, the request may be rejected. If authenticated, NSCL-1 2052 sends a response to NSCL-2 2054 (2012).

When NSCL-1 2052 needs to obtain capabilities from NSCL-2 2054 (2014), NSCL-1 2052 may send a CREATE request to NSCL-2 2054 for capability sharing (2016). In the request, NSCL-1 2052 indicates the capabilities it requires from NSCL-2 2054. Once NSCL-2 2054 grants the requested capabilities, NSCL-2 2054 may create the capSharedFrom resource, for example, under the <scl2Base>\scls\<scl1>remoteCaps\<capability> resource (2018). NSCL-2 2054 sends a success response to NSCL-1 2052 (2020).

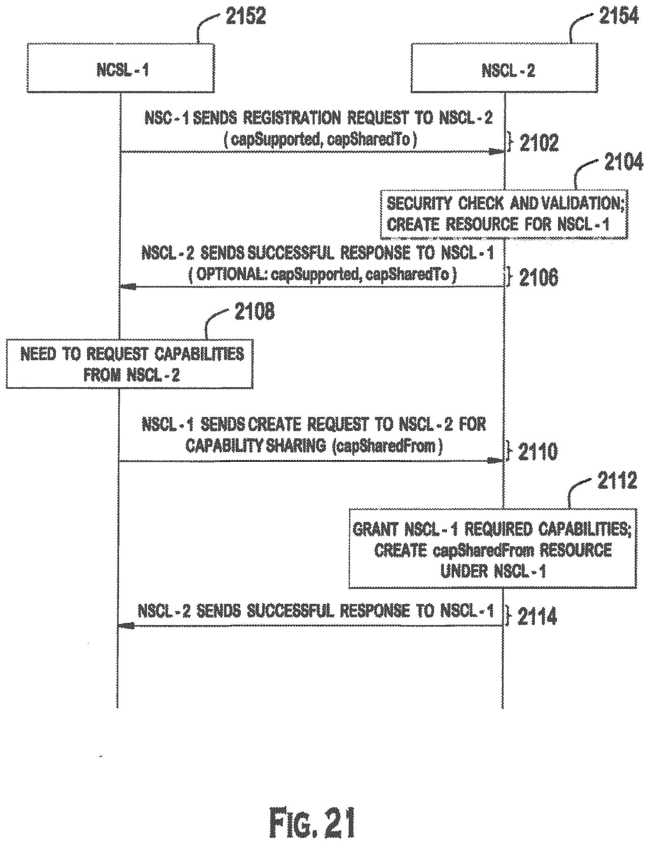

FIG. 21 is a signaling diagram of an example procedure for capability sharing without mutual registration. NSCL-1 2152 sends a registration request (e.g., CREATE) to NSCL-2 2154 (2102). In the request message, NSCL-1 2152 may include capability information, including capSupported and/or capSharedTo. NSCL-2 2154 knows the capabilities available from NSCL-1 2152 from capSharedTo. NSCL-2 2154 may perform the security checks to authenticate the communication of NSCLs and if authenticated and NSCL-1 2152 is allowed to communicate with NSCL-2 2154, NSCL-2 2154 may create a resource for NSCL-1 2152 (2104). If NSCL-1 2152 is not allowed to communicate with NSCL-2 2154, the request may be rejected. NSCL-2 2154 then sends a response to NSCL-1 2152 (2106).

Without mutual registration, NSCL-1 2152 may not be aware of the capabilities supported and offered by NSCL-2 2154. Alternatively, NSCL-2 2154 may include such information, (e.g., capSupported and/or capSharedTo), in the response to NSCL-1 2152. Since NSCL-1 2152 is registered to NSCL-2 2154, NSCL-2 2154 may decide if it may grant capabilities to NSCL-1 2152.

When NSCL-1 2152 needs to obtain capabilities from NSCL-2 2154 (2108), NSCL-1 2152 may send a CREATE request to NSCL-2 2154 for capability sharing (2110). In the request, NSCL-1 2152 indicates the capabilities it requires from NSCL-2 2154. Once NSCL-2 2154 grants the requested capabilities, NSCL-2 2154 may create the capSharedFrom resource, for example, under the <scl2Base>\scls\<scl1>remoteCaps\<capability> resource (2112). NSCL-2 2154 sends a success response to NSCL-1 2152 (2114).

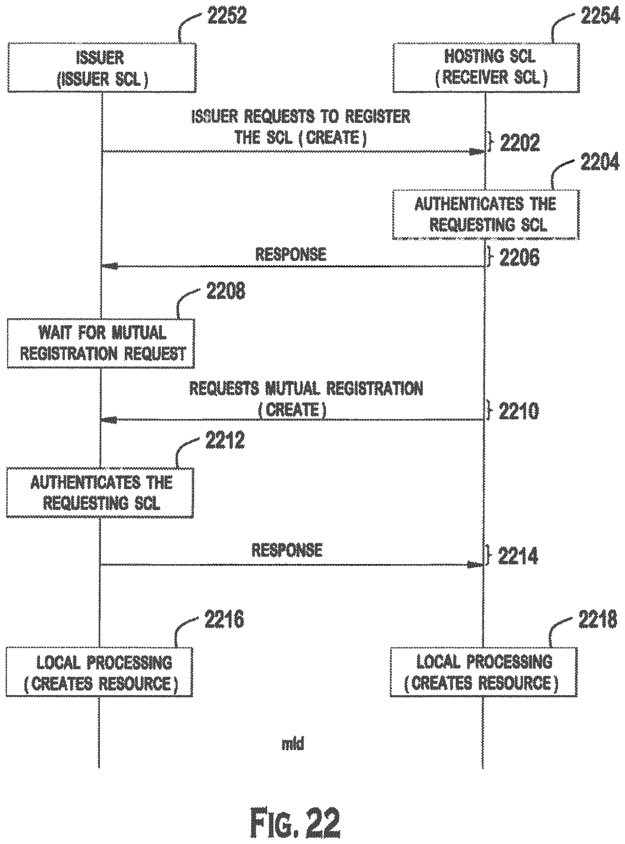

FIG. 22 is a signaling diagram of an example procedure for SCL mutual registration. The issuer SCL 2252 may send a CREATE request to the hosting SCL 2254 for registration (2202). Mutual registration may be initiated by the issuer SCL 2252. If so, in the CREATE request, the issuer SCL 2252 may indicate that a mutual registration is required. The hosting SCL 2254 may check if the issuer SCL 2252 is authorized to create the resource for the registration (2204).

If it is determined that the issuer SCL 2252 is authorized, the hosting SCL 2254 sends a positive respond to the request (2206). If mutual registration was not requested by the issuer SCL 2252 in the CREATE request, the mutual registration may be requested by the hosting SCL 2254. The hosting SCL 2254 may indicate it in the response. The issuer SCL 2252 may wait for the mutual registration request (2208). The issuer SCL 2252 knows that there is a mutual registration pending, since it either requested the mutual registration, or the response from the hosting SCL 2254 indicated a mutual registration.

The hosting SCL 2254 sends a mutual registration request (e.g., CREATE) (2210). The issuer SCL 2252 authenticates and authorizes the hosting SCL 2254 (2212). The issuer SCL 2252 responds positively to the request (2214).

The issuer SCL 2252 may creates the *scl* resource in its *sclBase* resource tree for the hosting SCL 2254 and the hosting SCL 2254 may creates the scl resource in its *sclBase* resource tree for the issuer SCL 2252 (2216, 2218).

For the issuer and hosting SCL 2252/2254 to indicate that a mutual registration is needed, two primitive types for the create request may be introduced: SCL_MUTUAL_CREATE_REQUEST and SCL_MUTUAL_CREATE_RESPONSE. Tables 2 and 3 show sclCreateRequestIndication and sclCreateResponseConfirm (successful case) primitives, respectively. STATUS_ACCEPTED may be used for the hosting SCL 2254 when sending the response back to the issuer SCL 2252. Alternatively, a new status code STATUS_MUTUAL_REGISTRATION_PENDING may be used.

**Table 2**

| **Primitive Attribute** | **Description** |
|---|---|
| requestingEntity | SCL originally requesting the primitive |
| targetID | The URI of the target entity where the SCL resource may be created. This request may address <sclBase>/scls/ of the target SCL. |
| primitiveType | SCL_MUTUAL_CREATE_REQUEST |

| **Resource** | **Description** |
|---|---|
| Scl | The scl resource to be created under <sclBase>/scls/ in the hosting SCL |

**Table 3**

| **Primitive Attribute** | **Description** |
|---|---|
| primitiveType | SCL_MUTUAL_CREATE_RESPONSE |
| statusCode | STATUS_MUTUAL_REGISTRATION_PENDING |
| resourceURI | The URI of the scl resource that was created under <sclBase>/scls/ |

| **Resource** | **Description** |
|---|---|
| scl | The scl resource created if hosting SCL over-wrote the values provided in the request |

Alternatively, an SCL may indicate that a mutual registration is required in the scl resource. For example, an attribute "mutualRegis" may be added to the <scl> resource attribute to indicate that a mutual registration is required. In this way, the indication may be discovered and retrieved by other SCLs. Alternatively, the SCL may include it as a primitive attribute in the sclCreateRequestIndication.

To facilitate an SCL to decide whether a mutual registration should be done, for example, an attribute called "sclType" may be added to the <scl> resource attribute list. The sclType attribute may indicate the SCL type: NSCL, GSCL, DSCL.

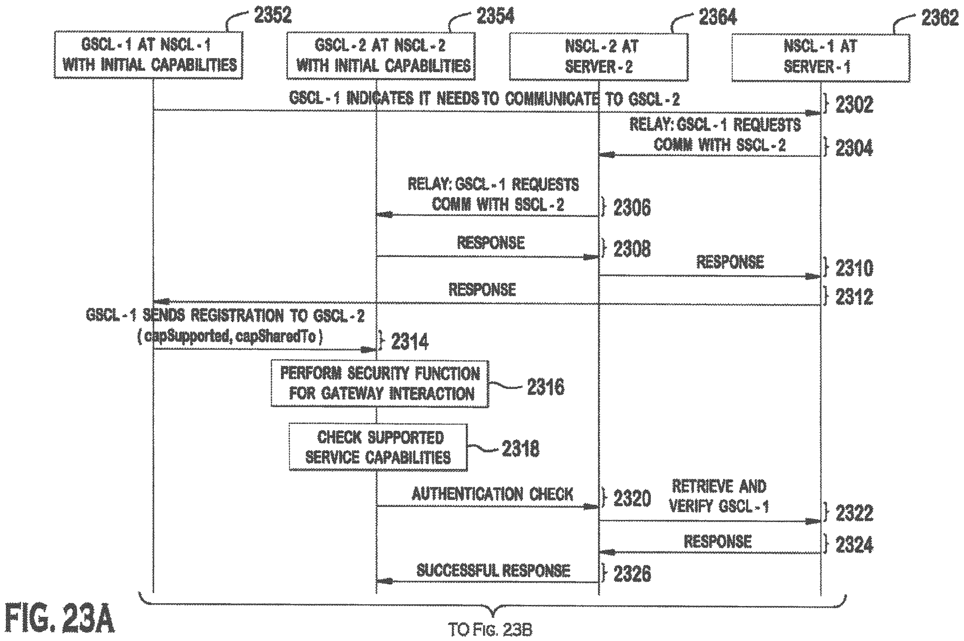

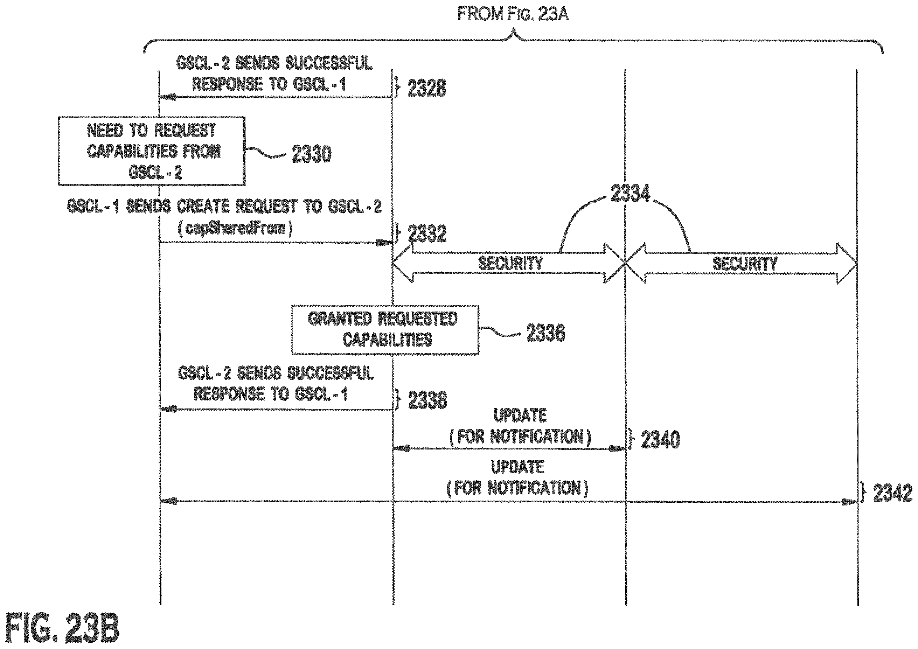

FIGS. 23A and 23B are a signaling diagram of an example procedure for GSCL-GSCL capability sharing. FIGS. 23A and 23B show the call flow when GSCL-1 2352 and GSCL-2 2354 are registered with NSCL-1 2362 and NSCL-2 2364, respectively, and GSCL-1 2352 wants to communicate and share capabilities with GSCL-2 2354. Although not shown in FIGS. 23A and 23B, GSCL-1 2352 and GSCL-2 2354 may perform mutual registration.

The capability sharing procedures between GSCL-1 2352 and GSCL-2 2354 are the same as NSCL-1 2362 and NSCL-2 2364. The additional complexity is the role of NSCLs in the communication and security. FIGS. 23A and 23B show as an example that security is managed by the NSCLs, and the communication is directed between GSCLs (with initial indication from NSCL-1). If the security and trust relationship allow, a fully distributed communication between xSCLs may be achieved.

GSCL-1 2352 indicates to NSCL-1 2362 that it wants to communicate with GSCL-2 2354 (2302). GSCL-1 2352 is already registered with NSCL-1 2362, and GSCL-2 2354 is already registered with NSCL-2 2364. NSCL-1 2362 may relay the request to NSCL-2 2364 (2304), and NSCL-2 2364 may relay the request to GSCL-2 2354 (2306). It is assumed that NSCL-1 2362 and NSCL-2 2364 have a trust relationship. GSCL-2 2354 sends a response which is related by NSCL-2 2364 and NSCL-1 2362 to GSCL-1 2352 (2308, 2310, 2312).

GSCL-1 2352 initiates the registration procedure by sending a registration request to GSCL-2 2354 (2314). In the request message, GSCL-1 2352 may include capability information, including capSupported and/or capSharedTo. GSCL-2 2354 knows the capabilities available from GSCL-1 2352 from capSharedTo. GSCL-2 2354 may perform security checks to authenticate the communication from GSCL-1 2352 (2316). GSCL-2 2354 may check supported service capabilities (2318).

Before sending a successful response, GSCL-2 2354 may ask for the authentication check from NSCL-2 2364 (2320). If GSCL-1 2352 and GSCL-2 2354 belong to the same service provider, GSCL-2 2354 may not need to authenticate the GSCL-1 2352. If GSCL-1 2352 and GSCL-2 2354 do not belong to the same service provider, NSCL-2 2364 may retrieve and verify GSCL-1 2352 from NSCL-1 2362 (2322). NSCL-1 2362 sends response back to NSCL-2 2364 (2324).

NSCL-2 2364 sends a successful response to GSCL-2 2354 if GSCL-1 2352 and GSCL-2 2354 are allowed to communicate (2326). GSCL-2 2354 sends a successful response to GSCL-1 2352 (2328).

When GSCL-1 2352 needs to obtain capabilities from GSCL-2 2354, GSCL-1 2352 may send a request (e.g., CREATE) to GSCL-2 2354 for capability sharing (2330, 2332). In the request, NSCL-1 2362 indicates the capabilities it requires from GSCL-2 2354. In terms of the capabilities requested from GSCL-1 2352, additional security check procedures may be performed between NSCL-1 2362 and NSCL-2 2364 (2334). GSCL-2 2354 grants the requested capabilities and sends a successful response to GSCL-1 2352 (2336, 2338). GSCL-1 2352 may update NSCL-1 2362 for the change of the capabilities, and GSCL-2 2354 may update NSCL-2 2364 for the change of the capabilities (2340, 2342).

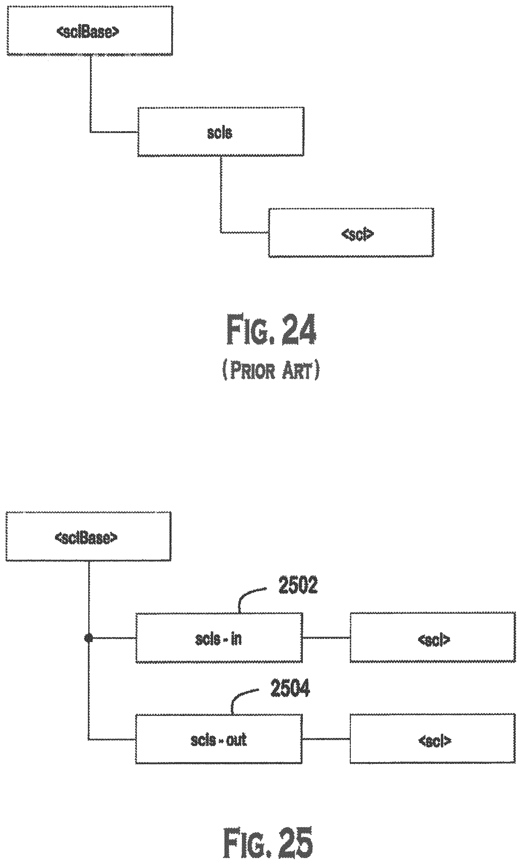

Currently in ETSI M2M, when SCL1 registers with SCL2, two <scl> resources are created, one in SCL1 and one in SCL2. FIG. 24 shows the conventional SCL resource structure. The resource on SCL1 may be like <sclBase1>/scls/<scl2>. This is a record that SCL1 keeps for itself which indicates that SCL1 is registered with SCL2. The resource on SCL2 may be like <sclBase2>/scls/<scl1>, which is the resource created on SCL2 that is related to SCL1. If there is another SCL, named SCL3, that registers with SCL1, a resource like <sclBase1>/scls/<scl3> will be created, based on the resource tree structure defined in ETSI M2M. There is no way to differentiate between scl2 and scl3.

The resource tree structure may be changed as shown in FIG. 25. In one embodiment, the two kinds of SCLs may be differentiated as scls-in 2502 and scl-out 2504. The scls-in 2502 is for the incoming scls, and the scls-out 2504 is for the outgoing scls. It should be noted that the name of the scls is provided as an example and any other name may be used. Using the same example as above, the different SCLs may be stored as: <sclBase1>/scls-out/<scl2> and <sclBase1>/scls-in/<scl3>.

In another embodiment, the same SCL resource structure may be kept without change, and a new attribute called, for example, "Direction" may be introduced. It should be noted that the name of the attribute is merely an example and any name may be used for the attribute. The "Direction" attribute indicates that if the SCL resource is the SCL where the local SCL registered to, or other SCLs that registered with the local SCL.

### Embodiments.

1. An apparatus for supporting M2M communications.
2. The apparatus of embodiment 1 comprising a processor comprising a service capability layer for providing M2M service capabilities that provide M2M functions that are to be shared by different applications.
3. The apparatus of embodiment 2 wherein the processor comprises an application configured to run a service logic and use the M2M service capabilities accessible via an open interface.
4. The apparatus of embodiment 3, wherein the application is configured to interact with an M2M gateway or an M2M device at an application level via the M2M service capabilities.
5. The apparatus as in any one of embodiments 2-4, wherein the processor is configured to interact with an M2M server, wherein the M2M server is split into an M2M control server and an M2M data server at a service capability layer to provide service capabilities for control functions and service capabilities for data functions, respectively.
6. The apparatus of embodiment 5, wherein the service capability layer interacts with the M2M control server and the M2M data server using separate interfaces.
7. The apparatus as in any one of embodiments 2-6, further comprising a resource for storing a list of M2M data servers assigned to the apparatus.
8. The apparatus as in any one of embodiments 3-7, wherein the application is configured to interact with another entity to push or pull data or resources in a sub-tree of resources in a resource tree structure.
9. The apparatus as in any one of embodiments 2-8, further comprising a capabilities resource for storing information for sharing of M2M service capabilities with other service capability layer.
10. The apparatus of embodiment 9, wherein each instance of the capabilities resource includes sub-resources for storing information regarding supported capabilities, capabilities shared with other service capability layers, and/or capabilities shared from other service capability layers.
11. The apparatus as in any one of embodiments 2-10, further comprising at least one of a resource for requested services, a resource for agreed services, or a resource for traffic statistics, wherein the resource for requested services describes which service types that a device or gateway service capability layer or application requests, the resource for agreed services describes which service types are approved to the device or gateway service capability layer or application, and the resource for traffic statistics is for storing traffic related measurements.
12. A method for supporting M2M communications.
13. The method of embodiment 12 comprising a device registering with an M2M server.
14. The method of embodiment 13, wherein the device and the M2M server comprise a service capability layer for providing M2M service capabilities that provide M2M functions that are to be shared by different applications.
15. The method as in any one of embodiments 13-14 further comprising the device interacting with an M2M gateway or another M2M device at an application level via the M2M service capabilities.
16. The method as in any one of embodiments 13-15, wherein the M2M server is split into an M2M control server and an M2M data server at a service capability layer that provide service capabilities for control functions and service capabilities for data functions, respectively.
17. The method of embodiment 16, wherein the device interacts with the M2M control server and the M2M data server using separate interface.
18. The method as in any one of embodiments 13-17, further comprising the device storing a list of M2M data servers assigned to the device in a resource.
19. The method as in any one of embodiments 13-18, further comprising the device interacting with another entity to push or pull data or resources in whole a sub-tree of resources in a resource tree structure.
20. The method as in any one of embodiments 13-19, further comprising storing information for sharing of M2M service capabilities with other service capability layer in a capabilities resource.
21. The method of embodiment 20, wherein each instance of the capabilities resource includes sub-resources for storing information regarding supported capabilities, capabilities shared with other service capability layers, and/or capabilities shared from other service capability layers.
22. The method as in any one of embodiments 13-21, wherein the device comprises at least one of a resource for requested services, a resource for agreed services, or a resource for traffic statistics, wherein the resource for requested services describes which service types that a device or gateway service capability layer or application requests, the resource for agreed services describes which service types are approved to the device or gateway service capability layer or application, and the resource for traffic statistics is for storing traffic related measurements.
23. An M2M communication network, comprising at least one network server configured to provide network service capabilities.
24. The network of embodiment 23 comprising at least one gateway configured to provide gateway service capabilities.
25. The network as in any one of embodiments 23-24, wherein reference points are provided at least between network service capability layers, between gateway service capability layers, between a gateway service capability layer and a device service capability layer of an M2M device, between M2M device applications, and/or between a network, gateway or device service capability layer and an M2M application.
26. The network as in any one of embodiments 23-25, wherein the network server is split into a control server and a data server at a service capability layer that provide service capabilities for control functions and service capabilities for data functions, respectively.
27. The network of embodiment 26, wherein reference points for control functions and data functions are separately provided between network service capability layers, between gateway service capability layers, between a gateway service capability layer and a device service capability layer, between M2M device application, and/or between a network, gateway or device service capability layer and an M2M application.
28. The network as in any one of embodiments 23-27, wherein one control server controls more than one data server.
29. The network as in any one of embodiments 26-28, wherein the data server is configured to interact with another data server, the gateway, or an M2M device to push or pull data or resources either directly or indirectly via the control server.
30. The network as in any one of embodiments 26-29, wherein the control server and the data server have a resource for storing a list of registered data servers or control servers.
31. The network as in any one of embodiments 23-30, wherein the network server and/or the gateway have a capabilities resource for storing information for sharing of capabilities with other network server or other gateway and each instance of the capabilities resource includes sub-resources for storing information regarding supported capabilities, capabilities shared with other service capability layers, and/or capabilities shared from other service capability layers.
32. The network as in any one of embodiments 24-31, wherein the gateway is configured to share gateway service capabilities with another gateway.
33. The network as in any one of embodiments 26-32, wherein the control server is configured to receive a registration request from an M2M device, gateway, or application, obtain a status of an M2M data server, select an M2M data server for the M2M device, gateway, or application, and send a registration response including an identity of the selected M2M data server to the M2M device, gateway, or application.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

### Aspects of the invention

1. An apparatus for supporting machine-to-machine (M2M) communications, the apparatus comprising a processor comprising:
   a service capability layer for providing machine-to-machine (M2M) service capabilities that provide M2M functions that are to be shared by different applications; and
   an application configured to run a service logic and use the M2M service capabilities accessible via an interface,
   wherein the application is configured to interact with an M2M gateway or an M2M device at an application level via the M2M service capabilities.
2. The apparatus of aspect 1 wherein the processor is configured to interact with an M2M server, wherein the M2M server is split into an M2M control server and an M2M data server at a service capability layer to provide service capabilities for control functions and service capabilities for data functions, respectively, and the service capability layer interacts with the M2M control server and the M2M data server using separate interfaces.
3. The apparatus of aspect 2 further comprising:
   a resource for storing a list of M2M data servers assigned to the apparatus.
4. The apparatus of aspect 1 wherein the application is configured to interact with another entity to push or pull data or resources in a sub-tree of resources in a resource tree structure.
5. The apparatus of aspect 1 further comprising a capabilities resource for storing information for sharing M2M service capabilities with another service capability layer and each instance of the capabilities resource includes sub-resources for storing information regarding supported capabilities, capabilities shared with other service capability layers, and/or capabilities shared from other service capability layers.
6. The apparatus of aspect 1 further comprising at least one of a resource for requested services, a resource for agreed services, or a resource for traffic statistics, wherein the resource for requested services describes which service types that a device or gateway service capability layer or application requests, the resource for agreed services describes which service types are approved to the device or gateway service capability layer or application, and the resource for traffic statistics is for storing traffic related measurements.
7. A method for supporting machine-to-machine (M2M) communications, the method comprising:
   a device registering with an M2M server, wherein the device and the M2M server comprise a service capability layer for providing M2M service capabilities that provide M2M functions that are to be shared by different applications; and
   the device interacting with an M2M gateway or another M2M device at an application level via the M2M service capabilities.
8. The method of aspect 7 wherein the M2M server is split into an M2M control server and an M2M data server at a service capability layer to provide service capabilities for control functions and service capabilities for data functions, respectively, and the device interacts with the M2M control server and the M2M data server using separate interfaces.
9. The method of aspect 8 further comprising:
   the device storing a list of M2M data servers assigned to the device in a resource.
10. The method of aspect 7 further comprising:
   the device interacting with another entity to push or pull data or resources in a sub-tree of resources in a resource tree structure.
11. The method of aspect 7 further comprising:
   storing information for sharing M2M service capabilities with another service capability layer in a capabilities resource, wherein each instance of the capabilities resource includes sub-resources for storing information regarding supported capabilities, capabilities shared with other service capability layers, and/or capabilities shared from other service capability layers.
12. The method of aspect 7 wherein the device comprises at least one of a resource for requested services, a resource for agreed services, or a resource for traffic statistics, wherein the resource for requested services describes which service types that a device or gateway service capability layer or application requests, the resource for agreed services describes which service types are approved to the device or gateway service capability layer or application, and the resource for traffic statistics is for storing traffic related measurements.
13. A machine-to-machine (M2M) communication network, comprising:
   at least one network server configured to provide network service capabilities; and
   at least one gateway configured to provide gateway service capabilities,
   wherein reference points are provided at least between network service capability layers, between gateway service capability layers, between a gateway service capability layer and a device service capability layer of an M2M device, between M2M device applications, and/or between a network, gateway or device service capability layer and an M2M application.
14. The network of aspect 13 wherein the network server is split into a control server and a data server at a service capability layer to provide service capabilities for control functions and service capabilities for data functions, respectively, and reference points for control functions and data functions are separately provided between network service capability layers, between gateway service capability layers, between a gateway service capability layer and a device service capability layer, between M2M device application, and/or between a network, gateway or device service capability layer and an M2M application.
15. The network of aspect 14 wherein one control server controls more than one data server.
16. The network of aspect 14 wherein the data server is configured to interact with another data server, the gateway, or an M2M device to push or pull data or resources either directly or indirectly via the control server.
17. The network of aspect 14 wherein the control server and the data server have a resource for storing a list of registered data servers and/or control servers.
18. The network of aspect 13 wherein the network server and/or the gateway have a capabilities resource for storing information for sharing capabilities with another network server or another gateway and each instance of the capabilities resource includes sub-resources for storing information regarding supported capabilities, capabilities shared with other service capability layers, and/or capabilities shared from other service capability layers.
19. The network of aspect 13 wherein the gateway is configured to share gateway service capabilities with another gateway.
20. The network of aspect 14 wherein the control server is configured to receive a registration request from an M2M device, gateway, or application, obtain a status of an M2M data server, select an M2M data server for the M2M device, gateway, or application, and send a registration response including an identity of the selected M2M data server to the M2M device, gateway, or application.

## Claims

1. A method for a machine-to-machine (M2M) control server configured to support M2M communications, the method comprising:
receiving, by the M2M control server, a registration request from each of a plurality of M2M data servers;
registering, by the M2M control server, each of the plurality of M2M data servers based on each of the registration requests in an inventory;
sending, by the M2M control server, after the registering, a respective registration response to each of the plurality of M2M data servers based on the registering;
receiving, by the M2M control server, a method request from a source regarding data stored on a first M2M data server of the plurality of registered M2M data servers; and
routing, by the M2M control server, the method request to the first M2M server based on one or more criteria.

2. The method of claim 1, wherein the method request is a type of representational state transfer request.

3. The method of claim 1, wherein the method request is one of CREATE, RETRIEVE, UPDATE, or DELETE.

4. The method of claim 1, wherein the source is one of a M2M data server, a M2M device, an M2M gateway, or a M2M application.

5. The method of claim 1, wherein the first M2M data server communicates with the M2M control server over a mlm reference point.

6. The method of claim 1, wherein the one or more criteria is one of load balancing, data availability, network congestion, or data server status.

7. The method of claim 1, further comprising:
transferring, by the M2M control server, a complete copy of the first M2M data server to a second M2M data server of the plurality of M2M data servers, and rerouting the method request to the second M2M data server.

8. The method of claim 7, wherein the complete copy includes one or more of:
a group of devices, a group of gateways, or a group of resources.

9. A machine-to-machine (M2M) control server for supporting M2M communications, comprising:
a transceiver operatively connected to a processor, the transceiver and processor configured to receive a registration request from each of a plurality of M2M data servers, register the plurality of M2M data servers in an inventory, and send a registration response to each of the plurality of M2M data servers based on the registration; and
the transceiver and processor further configured to receive a method request from a source regarding data stored on a first M2M data server of the plurality of M2M data servers and route the method request to the first M2M data server based on one or more criteria.

10. The M2M control server of claim 9, wherein the method request is a representational state transfer request.

11. The M2M control server of claim 9, wherein each method request is one of CREATE, RETRIEVE, UPDATE, or DELETE.

12. The M2M control server of claim 9, wherein the source is one of an M2M data server, an M2M device, an M2M gateway, or an M2M application.

13. The M2M control server of claim 9, wherein the one or more criteria is one of load balancing, data availability, network congestion, or data server status.

14. The M2M control server of claim 9, wherein the transceiver and processor are further configured to transfer a complete copy of the first M2M data server to a second M2M data server of the plurality of M2M data servers, and reroute the method request to the second M2M data server.

15. The M2M control server of claim 14, wherein the complete copy includes one or more of:
a group of devices, a group of gateways, or a group of resources.
